# EUROPEAN PATENT APPLICATION

(11) **EP 4 546 689 A1**
(43) Date of publication of application: **30.04.2025**
(21) Application number: 22947331.9
(22) Date of filing: 23.06.2022
(51) Int. Cl.: H04L 5/00, H04B 7/06, H04W 72/04

(54) **TCI STATE INDICATION METHOD AND APPARATUS, DEVICE AND MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/100831
(87) International publication number: WO 2023/245560

(57) **Abstract**

A TCI state indication method and apparatus, a device and a medium, which relate to the technical field of communications. The method is executed by a terminal (10, 1600), and comprises: receiving first indication information (220) for indicating a first TCI state, wherein the first TCI state comprises N TCI states, each TCI state comprises a joint TCI state and/or a downlink TCI state, and N is an integer greater than 1; and receiving target indication information (240) for indicating a target TCI state used in the reception by a target physical downlink control channel (PDCCH), wherein the target TCI state is a subset of the first TCI state. The method improves the transmission flexibility of the PDCCH by providing the target indication information for the PDCCH.

## Description

### FIELD

The present disclosure relates to a field of communication technology, and more particularly to a method and an apparatus for indicating a transmission configuration indication (TCI) state, a device and a medium.

### BACKGROUND

In the field of communication technology, in order to reduce a signaling overhead, a unified transmission configuration indicator (unified TCI state) is introduced for use. For example, if a base station indicates a unified TCI state for downlink, the TCI state may be applicable to a physical downlink shared channel (PDSCH), a physical downlink control channel (PDCCH) and some downlink reference signals of a terminal. If the base station indicates a unified TCI state for uplink, the TCI state may be applicable to a physical uplink shared channel (PUSCH), a physical uplink control channel (PUCCH) and some uplink reference signals of the terminal.

In the related art, the unified TCI state may be separately indicated for downlink and uplink, or be indicated jointly for downlink and uplink. That is, if the base station indicates a TCI state for downlink, the TCI state may be applicable to the PDSCH, the PDCCH, and some channel state information reference signals (CSI-RSs) of the terminal. If the base station indicates a TCI state for uplink, the TCI state may be applicable to the PUSCH, the PUCCH, and some sounding reference signals (SRSs) of the terminal. If the base station indicates a joint TCI state, the joint TCI state may be applicable to both an uplink channel/reference signal and a downlink channel/reference signal.

However, the related art is only applicable to a case of a single transmission reception point (S-TRP).

### SUMMARY

Embodiments of the present disclosure provide a method and an apparatus for indicating a TCI state, a device and a medium, which may flexibly indicate a TCI state used by a PDCCH when performing a multi transmission reception point (M-TRP) transmission, and may realize a dynamic switching of the M-TRP transmission and an S-TRP transmission of the PDCCH. The technical solution will be described as follows.

According to a first aspect of the present disclosure, a method for indicating a TCI state is provided, which is performed by a terminal and includes: receiving first indication information, in which the first indication information is used to indicate a first TCI state, the first TCI state includes N TCI states, and the TCI state includes a joint TCI state and/or a downlink TCI state, in which N is an integer greater than 1; and receiving target indication information, in which the target indication information is used to indicate a target TCI state used in a case that a target physical downlink control channel (PDCCH) is received, and the target TCI state is a subset of the first TCI state.

According to a second aspect of the present disclosure, a method for indicating a TCI state is provided, which is performed by an access network device and includes: sending first indication information, in which the first indication information is used to indicate a first TCI state, the first TCI state includes N TCI states, and the TCI state includes a joint TCI state and/or a downlink TCI state, in which N is an integer greater than 1; and sending target indication information, in which the target indication information is used to indicate a target TCI state used in a case that a target physical downlink control channel (PDCCH) is received, and the target TCI state is a subset of the first TCI state.

According to a third aspect of the present disclosure, an apparatus for indicating a TCI state is provided, which includes: a first receiving module configured to receive first indication information, in which the first indication information is configured to indicate a first TCI state, the first TCI state includes N TCI states, and the TCI state includes a joint TCI state and/or a downlink TCI state, in which N is an integer greater than 1; and a target receiving module configured to receive target indication information, in which the target indication information is configured to indicate a target TCI state used in a case that a target physical downlink control channel (PDCCH) is received, and the target TCI state is a subset of the first TCI state.

According to a fourth aspect of the present disclosure, an apparatus for indicating a TCI state is provided, which includes: a first sending module configured to send first indication information, in which the first indication information is configured to indicate a first TCI state, the first TCI state includes N TCI states, and the TCI state include a joint TCI state and/or a downlink TCI state, in which N is an integer greater than 1; and a target sending module configured to send target indication information, in which the target indication information is used to indicate a target TCI state used in a case that a target physical downlink control channel (PDCCH) is received, and the target TCI state is a subset of the first TCI state.

According to a fifth aspect of embodiments of the present disclosure, a terminal is provided, which includes: a processor; a transceiver connected with the processor; and a memory for storing instructions executable by the processor. The processor is configured to load and execute the executable instructions to enable the terminal to realize the above method for indicating the TCI state according to any aspect.

According to a sixth aspect of embodiments of the present disclosure, an access network device is provided, which includes: a processor; a transceiver connected with the processor; and a memory for storing instructions executable by the processor. The processor is configured to load and execute the executable instructions to enable the access network device to realize the above method for indicating the TCI state according to any aspect.

According to seventh aspect of embodiments of the present disclosure, a chip is provided, and a communication device equipped with the chip is used to realize the above method for indicating the TCI state according to any aspect.

According to an eighth aspect of the present disclosure, a computer-readable storage medium is provided, in which at least one instruction, at least one program, a code set or an instruction set is stored, and the at least one instruction, the at least one program, the code set or the instruction set is loaded and executed by a processor to enable a communication device to realize the method for indicating the TCI state as described above.

The technical solution provided by the embodiments of the present disclosure at least has the following beneficial effects.

This solution may realize a dynamic switching between the M-TRP transmission and the S-TRP transmission of the PDCCH via the target indication information during the M-TRP transmission, so as to improve a transmission flexibility of the PDCCH.

### BRIEF DESCRIPTION OF THE DRAWINGS

In order to explain the technical solution in the embodiments of the present disclosure more clearly, the drawings needed in the description of the embodiments will be briefly introduced below. Obviously, the drawings in the following description are only some embodiments of the present disclosure. For those ordinary skilled in the art, other drawings may be obtained according to these drawings without creative work.
Fig. 1 is a schematic diagram of a PDCCH according to an illustrative embodiment.
Fig. 2 is a schematic diagram of a communication system according to an illustrative embodiment.
Fig. 3 is a flow chart of a method for indicating a TCI state according to an illustrative embodiment.
Fig. 4 is a flow chart of a method for indicating a TCI state according to an illustrative embodiment.
Fig. 5 is a flow chart of a method for indicating a TCI state according to an illustrative embodiment.
Fig. 6 is a flow chart of a method for indicating a TCI state according to an illustrative embodiment.
Fig. 7 is a flow chart of a method for indicating a TCI state according to an illustrative embodiment.
Fig. 8 is a flow chart of a method for indicating a TCI state according to an illustrative embodiment.
Fig. 9 is a flow chart of a method for indicating a TCI state according to an illustrative embodiment.
Fig. 10 is a flow chart of a method for indicating a TCI state according to an illustrative embodiment.
Fig. 11 is a block diagram of an apparatus for indicating a TCI state according to an illustrative embodiment.
Fig. 12 is a block diagram of an apparatus for indicating a TCI state according to an illustrative embodiment.
Fig. 13 is a schematic diagram of a terminal according to an illustrative embodiment.
Fig. 14 is a schematic diagram of a network device according to an illustrative embodiment.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the present disclosure. Rather, they are merely examples of apparatuses and methods consistent with some aspects of the present disclosure as detailed in the appended claims.

The network architecture and service scenarios described in the embodiments of the present disclosure are for more clearly explaining the technical solution of the embodiments of the present disclosure, and do not constitute the limitation of the technical solution according to the embodiments of the present disclosure. As those ordinary skilled in the art know, with the evolution of the network architecture and the emergence of new service scenarios, the technical solution according to the embodiments of the present disclosure is also applicable to similar technical problems.

First, several terms in the embodiments of the present disclosure are briefly introduced.

TCI state: it is used to inform a terminal that quasi co-location (QCL) information or a spatial reception parameter (spatial Rx parameter) used when receiving a PDCCH/PDSCH and/or a DMRS thereof are the same as those used when receiving which reference signal (a synchronization signal block, (SSB) or a channel state information reference signal (CSI-RS)) sent by a base station; or inform the terminal that QCL information or spatial relationship information or a spatial filter used when sending a PUCCH/PUSCH and/or a DMRS thereof are the same as those used when sending which reference signal (such as a SRS or a CSI-RS).

Unified TCI state: in a case that the base station indicates a unified TCI state for downlink, this TCI state may be suitable for the PDSCH, the PDCCH and some downlink reference signals of the terminal; in a case that the base station indicates a unified TCI state for uplink, this TCI state may be suitable for indicating the PUSCH, the PUCCH and some uplink reference signals of the terminal. At present, the unified TCI state may adopt a separate indication of a separate uplink TCI state and a separate downlink TCI state, or a joint indication of an uplink-downlink joint TCI state.

The separate uplink TCI state is suitable for uplink channels and/or signals, the separate downlink TCI state is suitable for downlink channels and/or signals, and the joint TCI state is suitable for both uplink channels and/or signals and downlink channels and/or signals.

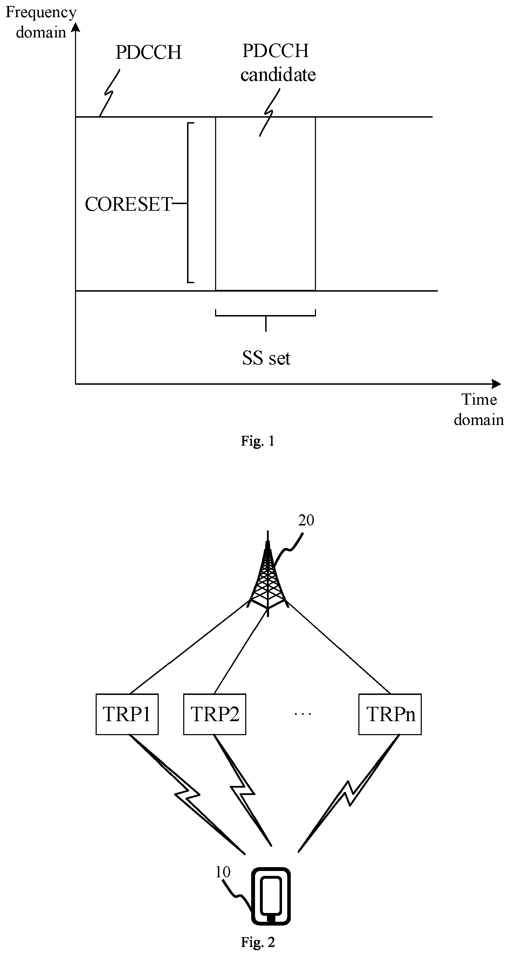

PDCCH candidate: the reception of the PDCCCH includes at least one PDCCH candidate, Fig. 1 illustrates one PDCCH candidate as an example, the PDCCH candidate belongs to a search space set (SS set), the SS set is used to describe a time-domain position of the PDCCH search, the SS set is associated with a control resource set (CORESET), and the CORESET is used to describe frequency domain characteristics of the PDCCH and the number of symbols occupied in a time domain. Fig. 1 briefly describes the association among the PDCCH candidate, the SS set and the CORESET in the reception of the PDCCH.

Fig. 2 shows a schematic diagram of a communication system according to an embodiment of the present disclosure. The communication system may include a terminal 10 and an access network device 20.

A plurality of terminals 10 are usually provided, and one or more terminals 10 may be distributed in a cell managed by each access network device 20. The terminal 10 may include various handheld devices, vehicle-mounted devices, wearable devices, computing devices or other processing devices connected to a wireless modem, which have a wireless communication function, as well as various forms of user equipment (UE), mobile stations (MS) and the like. For convenience of description, in the embodiments of the present disclosure, the above devices are collectively referred to as the terminal.

The access network device 20 is an apparatus deployed in an access network to provide a wireless communication function for the terminal 10. The access network device 20 may include various forms of macro base stations, micro base stations, relay stations and access points. In systems with different wireless access technologies, the names of devices with the function of the access network device may be different, for example, in a 5G NR system, it is called a gNodeB or a gNB. With the evolution of communication technology, the name "access network device" may change. For convenience of description, in the embodiments of the present disclosure, the above devices providing the wireless communication function for the terminal 10 are collectively referred to as the access network device. A connection may be established between the access network device 20 and the terminal 10 through an air interface, so that the access network device 20 and the terminal 10 may communicate through the connection, including the interaction of signaling and data. A plurality of access network devices 20 may be provided, and two adjacent access network devices 20 may also communicate in a wired or wireless manner. The terminal 10 may switch between different access network devices 20, that is, establish connections with different access network devices 20.

Optionally, the access network device 20 is provided with at least two TRP; or, at least two access network devices 20 are provided, each of which is provided with at least one TRP, that is, the at least two access network devices 20 are provided with at least two TRPs. That is, the at least two TRPs may come from the same cell or different cells. A communication connection is established between the terminal 10 and the at least two TRPs through a downlink TCI state and/or an uplink TCI state. Optionally, different TRPs use different downlink TCI states and/or uplink TCI states. For example, the terminal 10 determines the downlink TCI state that needs to be used to receive the PDCCH according to the joint TCI state or the downlink TCI state; and the terminal 10 determines the uplink TCI state that needs to be used to send the PUSCH according to the joint TCI state or the uplink TCI state.

The "5G NR system" in the embodiments of the present disclosure may also be called a 5G system or a NR system, and those skilled in the art may understand its meaning. The technical solution described in the embodiments of the present disclosure may be applied to the 5G NR system and the subsequent evolution systems of the 5G NR system.

In the New Radio (NR), especially when the communication frequency band is in frequency range 2, since the high-frequency channel attenuates rapidly, in order to ensure the coverage, it is necessary to use beam-based transmission and reception.

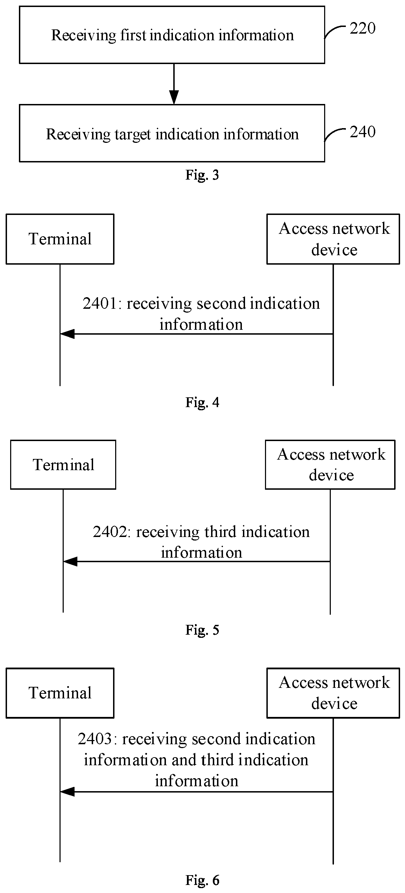

Fig. 3 shows a flow chart of a method for indicating a TCI state according to an embodiment of the present disclosure. The method may be applied to the terminal in the communication system shown in Fig. 2. The method includes the following steps.

In step 220, first indication information is received.

The terminal receives the first indication information sent by the access network device.

The first indication information is used to indicate a first TCI state, the first TCI state includes N TCI states, and the TCI states include a joint TCI state and/or a downlink TCI state, where N is an integer greater than 1. That is, the first indication information is information used to indicate a plurality of joint/downlink TCI states. That is, the first indication information is used to indicate a unified TCI state of downlink channels and/or signals. Each TCI state of the N TCI states may be the joint TCI state or the downlink TCI state.

In some embodiments, the first indication information is carried in a first medium access control control element (MAC CE), and the first MAC CE is used to indicate the N TCI states. The N TCI states correspond to one code point in a TCI domain of downlink control information (DCI). That is, the first indication information is only carried in the first MAC CE. Since the N TCI states indicated in the first MAC CE only correspond to one code point in the TCI field of the DCI, the base station does not need to send additional DCI to the terminal to indicate the code point, thus saving signaling overhead.

In some embodiments, the first indication information is carried in a second MAC CE and a first DCI, the second MAC CE is used to indicate N TCI states corresponding to each of at least two code points, and the first DCI is used to indicate one code point of the at least two code points. That is, both the second MAC CE and the first DCI are used to indicate the first indication information. The second MAC CE indicates the N TCI states corresponding to each of the at least two code points in a TCI domain of the first DCI, and the first DCI is used to indicate the code point, so that the N TCI states corresponding to the code point are obtained by querying the second MAC CE. In this case, the second MAC CE may indicate a plurality of sets of code point configurations, and each set of code point configuration corresponds to N TCI states. It should be noted that each code point corresponds to N TCI states, and a value of N corresponding to each code point may be the same or different.

In some embodiments, the first indication information further includes identification information (ID) corresponding to each TCI state, and the identification information includes a control resource set pool index (CORESETPoolIndex) or a CORESET group ID or an SS set group ID or a PDCCH group ID; or, the first indication information includes N TCI states, and each TCI state of the N TCI states has a default mapping relationship with identification information.

That is, in a case, each TCI state of the N TCI states has a default mapping relationship with the identification information, and the first indication information does not need to additionally indicate the corresponding relationship between the TCI state and the identification information; in another case, there is no default mapping relationship between the TCI state and the identification information, and thus the first indication information further includes the corresponding relationship between each TCI state and the identification information.

In step 240, target indication information is received.

The terminal receives the target indication information sent by the access network device.

The target indication information is used to indicate a target TCI state used in a case that a target PDCCH is received, and the target TCI state is a subset of the first TCI state. The target TCI state is the first TCI state; or, the target TCI state is a proper subset of the first TCI state (a part of TCI states in the first TCI state). The target indication information is used to instruct the terminal to use all or part of TCI states in the first TCI state to receive the target PDCCH. The target PDCCH may be a first PDCCH or a second PDCCH.

In some embodiments, the target indication information received by the terminal is second indication information, and the second indication information is used to indicate a second TCI state used in a case that the first PDCCH is received. In some embodiments, the target indication information received by the terminal is third indication information, and the third indication information is used to indicate a third TCI state used in a case that the second PDCCH is received. In some embodiments, the target indication information received by the terminal includes the second indication information and the third indication information.

To sum up, in a case that the terminal receives the first indication information for indicating a plurality of sets of TCI states, the terminal further receives the target indication information for indicating the TCI state used when the PDCCH is received, thus realizing the dynamic switching between a M-TRP transmission state and a S-TRP transmission state, and improving the transmission flexibility of the PDCCH based on the unified TCI state.

In the following, receiving the target indication information in step 240 will be described in different cases.
1) In some embodiments with reference to Fig. 4, in step 2401, the terminal receives the second indication information.

The second indication information is used to indicate the second TCI state used in a case that the first PDCCH is received. The second TCI state includes M TCI states, the M TCI states are a subset of the N TCI states, and M is a positive integer not greater than N. That is, the M TCI states are the same as the N TCI states, or the M TCI states are a proper subset of the N TCI states. That is, the M TCI states are all or part of the N TCI states.

In some embodiments, a reception of the first PDCCH includes at least two PDCCH candidates, and the SS sets corresponding to the at least two PDCCH candidates have a link relationship; each SS set has a corresponding CORESET. The CORESET corresponding to each SS set may be the same or different. The link relationship of the SS sets means that the PDCCH candidates corresponding to the same identification information in the SS sets are used to send the same PDCCH, and the reception of one PDCCH includes a plurality of PDCCH candidates, that is, the repetitive transmission of one PDCCH. In an illustrative case, the number of the PDCCH candidates is two, and the SS sets corresponding to the two PDCCH candidates have a link relationship, that is, the PDCCH candidates corresponding to the same identification information in the two SS sets with the link relationship are used to send the same PDCCH.

In some embodiments, each SS set or each CORESET described above is configured with one TCI state. That is, each SS set or each CORESET has one corresponding identification information, and the identification information has a corresponding relationship with the TCI state. The identification information includes a CORESETPoolIndex or a CORESET group ID or an SS set group ID or a PDCCH group ID.

In some embodiments, the second indication information is also used to indicate the TCI state corresponding to each SS set or each CORESET described above. That is, whether the TCI state corresponding to each SS set or each CORESET described above is the same or different is determined by the second indication information.

In some embodiments, the second indication information further includes identification information corresponding to the at least two PDCCH candidates, and/or a corresponding relationship between identification information and the M TCI states. The identification information includes a CORESETPoolIndex or a CORESET group ID or an SS set group ID or a PDCCH group ID.

It should be noted that when M>1, the first indication information or the second indication information indicates the above corresponding relationship, that is, in a case that the first PDCCH is received, each PDCCH candidate uses a TCI state corresponding to its corresponding identification information to receive the PDCCH, and this is the M-TRP transmission state. When M=1, the second indication information does not indicate the above corresponding relationship, the plurality of PDCCHs use the same TCI state to receive the PDCCH, and this is the S-TRP transmission state.

In some embodiments, the second indication information is carried in a third MAC CE. The third MAC CE is the same as or different from a MAC CE where the first indication information is located. The MAC CE where the first indication information is located includes the first MAC CE or the second MAC CE. In a case that the first indication information is carried in the first MAC CE, the third MAC CE is the same as or different from the first MAC CE; or, in a case that the first indication information is carried in the second MAC CE and the first DCI, the third MAC CE is the same as or different from the second MAC CE.

In some embodiments, in a case that the third MAC CE is the same as the MAC CE carrying the first indication information, the third MAC CE is used to indicate both the N TCI states (content of the first indication information) and the M TCI states (content of the second indication information). Optionally, the third MAC CE is also used to indicate a corresponding relationship between identification information and the N TCI states (optional content of the first indication information) and/or indicate a corresponding relationship between identification information and the M TCI states (optional content of the second indication information). The identification information includes a CORESETPoolIndex or a CORESET group ID or an SS set group ID or a PDCCH group ID. For example, the third MAC CE is a unified TCI state activation/deactivation MAC CE, which is used to indicate both the first indication information and the second indication information.

In other words, in a case that the third MAC CE is the same as the MAC CE carrying the first indication information, the information carried in the same MAC CE includes the content contained in the first indication information and the content contained in the second indication information. That is, the third MAC CE includes not only information related to indicating the N TCI states, but also information related to indicating the M TCI states.

The information related to the N TCI states includes at least one of the N TCI states and identification information corresponding to each TCI state. The information related to the M TCI states includes at least one of the M TCI states, SS sets corresponding to at least two PDCCH candidates, a CORESET corresponding to each SS set, identification information or a TCI state corresponding to each SS set or each CORESET, identification information corresponding to at least two PDCCH candidates, and a corresponding relationship between identification information and the M TCI states. The information included in the third MAC CE includes any combination of the information related to the N TCI states and the information related to the M TCI states.

In some embodiments, the second indication information is carried in a second DCI, the second DC is the same as or different from a DCI where the first indication information is located. That is, in a case that the first indication information is carried in the second MAC CE and the first DCI, the second DCI and the first DCI may be the same or different.

For example, the first indication information is carried in a DCI in a DCI format of 1_1 or 1_2 without a downlink assignment, and the second DCI is the DCI in the DCI format of 1_1 or 1_2 without the downlink assignment; or, the first indication information is carried in a DCI in a DCI format of 1_1 or 1_2 with a downlink assignment, and the second DCI is a DCI in the DCI format of 1_1 or 1_2 without the downlink assignment; or, the first indication information is carried in a DCI in a DCI format of 1_1 or 1_2 without a downlink assignment, and the second DCI is a DCI in the DCI format of 1_1 or 1_2 with the downlink assignment; or, the first indication information is carried in a DCI in a DCI format of 1_1 or 1_2 with a downlink assignment, and the second DCI is the DCI in the DCI format of 1_1 or 1_2 with the downlink assignment; or, the first indication information is carried in a DCI in a DCI format of 1_1 or 1_2 with or without a downlink assignment, and the second DCI is a DCI in a DCI format other than 1_1 and 1_2.

For example, in a case that the DCI where the second indication information is located is the DCI without the downlink assignment, a field used by the second indication information in the DCI in the DCI format of 1_1 or 1_2 without the downlink assignment includes at least one of:
a frequency domain resource assignment (FDRA);
a time domain resource assignment (TDRA);
a virtual resource block to physical resource block mapping (VRB-to-PRB mapping);
a physical resource block binding size indicator (PRB bundling size indicator);
a rate matching indicator;
a non-zero power channel state information reference signal (CSI-RS) triggering;
a hybrid automatic repeat request (HARQ) process number;
a downlink assignment index;
a transmit power control (TPC) command for a scheduled physical uplink control channel (PUCCH);
a second TPC command for a scheduled PUCCH;
a PUCCH resource indicator;
a timing indicator form a physical downlink shared channel (PDSCH) to a HARQ feedback (PDSCH-to-HARQ feedback timing indicator);
a one-shot hybrid automatic repeat request acknowledgement (HARQ-ACK) request;
an enhanced type 3 codebook indicator;
a PDSCH group index;
a new feedback indicator;
the number of requested PDSCH groups;
a HARQ-ACK retransmission indicator;
an antenna port;
a sounding reference signal (SRS) request;
a SRS offset indicator (CBGFI);
code block group (CGB) transmission information;
CBG flushing out information;
a demodulation reference signal (DMRS) sequence initialization;
a priority indicator;
a channel access-cyclic prefix (CP);
a minimum applicable scheduling offset indicator;
a secondary cell (SCell) dormancy indication;
a PDCCH monitoring adaptation indication;
a PUCCH cell indicator;
a redundancy version;
a TCI state indication field;
an enhanced TCI state indication field; and
a newly added TCI state indication field: a second TCI state indication field.

In another case, when the DCI where the second indication information is located is the DCI with the downlink assignment, a field used by the second indication information in the DCI in the DCI format of 1_1 or 1_2 with the downlink assignment includes at least one of:
a frequency domain resource assignment;
a time domain resource assignment;
a virtual resource block to physical resource block mapping;
a physical resource block binding size indicator;
a rate matching indicator;
a non-zero power CSI-RS triggering;
a HARQ process number;
a downlink assignment index;
a transmit power control (TPC) command for a scheduled PUCCH;
a second TPC command for a scheduled PUCCH;
a PUCCH resource indicator;
a timing indicator from a PDSCH to a HARQ feedback;
a one-shot HARQ-ACK request;
an enhanced type 3 codebook indicator;
a PDSCH group index;
a new feedback indicator;
the number of requested PDSCH groups;
a HARQ-ACK retransmission indicator;
an antenna port;
a sounding reference signal (SRS) request;
a SRS offset indicator;
CGB transmission information;
CBG flushing out information (CBGFI);
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a newly added TCI state indication field: a second TCI state indication field.

In some embodiments, the second indication information is in the DCI in the DCI format of 1_1 or 1_2 with the downlink assignment, and the second indication information uses at least a part of bits or at least a part of code points of an existing information field.

For example, the existing information field used by the second indication information occupies at most 3 bits, the existing information occupies the first 2 bits of the 3 bits, and the second indication information occupies the last 1 bit of the 3 bits.

For another example, at most 6 bits may be used in a TDRA field. In a case that TDRA needs to indicate the time domain resource assignment and the number of bits required for the time domain resource assignment is 4 (less than 6 bits), the remaining 2 bits in the TDRA field except the 4 bits occupied by the time domain resource assignment may be used to indicate the second indication information.

Optionally, the field used by the second indication information may be an existing information field, or a combination of an existing information field and a newly added information field. That is, in a case that the second indication information needs to use 3 bits, the 3 bits may be 3 bits corresponding to the existing information field; or, the 3 bits include a combination of X bits corresponding to the existing information field and Y bits corresponding to the newly added information field, where x+y=3, X>1 and Y>1; or, the 3 bits include 3 bits corresponding to the newly added information field.

For example, the field used by the second indication information is a TCI state indication field (up to 3 bits in the traditional case), or an enhanced TCI state indication field (enhanced to more than 3 bits), or a newly added second TCI state indication field (at least 1 bit).

In some embodiments, the second indication information is in the DCI in the DCI format of 1_1 or 1_2 with the downlink assignment, and the existing information field is used to indicate a combination of existing information and the second indication information.

For example, the communication protocol defines a table in advance, and the table includes at least one line of the existing information and the second indication information. As shown in Table 1 below, each row of the existing information and the second indication information forms a combination of the existing information and the second indication information, and each row is indicated by a different code point. For example, code point 00 indicates the first row in the table, that is, the combination of existing information 1 and second indication information 1. The bits in the existing information field are used to indicate one code point in the table, and a combination of the existing information and the second indication information may be determined by searching a corresponding row in the table through the code point.

**Table 1**

| Code point | Existing information | Second indication information |
|---|---|---|
| 00 | Existing information 1 | Second indication information 1 |
| 01 | Existing information 2 | Second indication information 2 |
| 10 | Existing information 3 | Second indication information 3 |
| 11 | Existing information 4 | Second indication information 4 |

In some embodiments, the second indication information is in the DCI in the DCI format of 1_1 or 1_2 without the downlink assignment, and the second indication information uses at least a part of the bits of the existing information field. That is, in a case that the field used by the second indication information does not need to indicate information related to the downlink assignment, all or part of the bits in this field are used to indicate the second indication information.

For example, the existing information field occupies 3 bits. In a case that the existing information field does not need to indicate information related to the downlink assignment in this downlink assignment, all the 3 bits or at least one bit in this domain may be used to indicate the second indication information.

In another case, when the second DCI is the DCI in the DCI format other than 1_1 and 1_2, an SS set type associated with the second DCI is a user equipment (UE) specific SS set or a common SS set.

In some embodiments, possible cases of the positions of the first indication information and the second indication information may also include: the first indication information is carried in the MAC CE and the second indication information is carried in the DCI; or, the first indication information is carried in the DCI and the second indication information is carried in the MAC CE.

It should be noted that the updates of the first indication information and the second indication information are independent. That is, possible situations of information update include: the first indication information remains unchanged, and the second indication information changes; or, the first indication information changes, and the second indication information remains unchanged; or, both the first indication information and the second indication information changes.

2) In some embodiments with reference to Fig. 5, in step 2402, the terminal receives the third indication information.

The third indication information is used to indicate the third TCI state used in a case that the second PDCCH is received. The third TCI state includes L TCI states, the L TCI states are a subset of the N TCI states, and L is a positive integer not greater than N. That is, the L TCI states are the same as the N TCI states, or the L TCI states are a proper subset of the N TCI states. That is, the L TCI states are all or part of the N TCI states.

In some embodiments, a reception of the second PDCCH includes one PDCCH candidate, and an SS set or a CORESET corresponding to the PDCCH candidate is configured with at least one TCI state. That is, the second PDCCH only corresponds to one PDCCH candidate, and the SS set or the CORESET corresponding to this PDCCH candidate is configured with L TCI states. That is, the SS set or the CORESET corresponding to the PDCCH candidate corresponds to L pieces of identification information, and the identification information includes a CORESETPoolIndex or a CORESET group ID or an SS set group ID or a PDCCH group ID.

Further, the third indication information is used to indicate the L TCI states, that is, the number of the TCI states configured for the PDCCH candidate corresponding to the second PDCCH is determined by the third indication information. When L>1, the PDCCH corresponds to at least two TCI states, that is, the M-TRP transmission state. When L is equal to 1, the PDCCH corresponds to one TCI state, that is, the S-TRP transmission state.

In some embodiments, the reception of the second PDCCH is configured as a transmission scheme based on a single-frequency network (SFN), and the number of the at least one TCI state is greater than or equal to 1.

Further, the transmission scheme based on the SFN includes SFN scheme A or SFN scheme B. In the SFN scheme, the TCI states used to transmit the PDCCH include at least two TCI states, and each TCI state includes a joint TCI state or a downlink TCI state. In a case that the reception of the second PDCCH is configured as the transmission scheme based on the SFN, the SFN transmission may also be dynamically switched to the S-TRP transmission. That is, in a case that the number of the TCI states is greater than 1, it is the transmission based the SFN; otherwise, it is dynamically switched to the S-TRP transmission. Optionally, the time domain resources and the frequency domain resources used to transmit the PDCCH are the same, and the DMRS ports used to transmit the demodulation reference signal of the PDCCH are the same.

For example, in SFN scheme A, in a case that at least two TCI states are indicated, the terminal assumes that the DMRS ports for transmitting the PDCCH are quasi-co-located with the downlink reference signals of the at least two TCI states. In SFN scheme B, in a case that at least two TCI states are indicated, the terminal assumes that the DMRS ports for transmitting the PDCCH are quasi-co-located with the downlink reference signals of the at least two TCI states, except for quasi co-location parameters {Doppler shift, Doppler spread} of the second TCI state.

In some embodiments, the third indication information is carried in a fourth MAC CE, and the fourth MAC CE is the same as or different from the MAC CE where the first indication information is located. That is, in a case that the first indication information is carried in the first MAC CE, the fourth MAC CE is the same as or different from the first MAC CE; or, in a case that the first indication information is carried in the second MAC CE and the first DCI, the fourth MAC CE is the same as or different from the second MAC CE.

In some embodiments, the third indication information is carried in a third DCI, and the third DCI is the same as or different from the first DCI. That is, in a case that the first indication information is carried in the second MAC CE and the first DCI, the third DCI and the first DCI may be the same or different.

For example, the first indication information is carried in a DCI in a DCI format of 1_1 or 1_2 without a downlink assignment, and the third DCI is the DCI in the DCI format of 1_1 or 1_2 without the downlink assignment; or, the first indication information is carried in a DCI in a DCI format of 1_1 or 1_2 with a downlink assignment, and the third DCI is a DCI in the DCI format of 1_1 or 1_2 without the downlink assignment; or, the first indication information is carried in a DCI in a DCI format of 1_1 or 1_2 without a downlink assignment, and the third DCI is a DCI in the DCI format of 1_1 or 1_2 with the downlink assignment; or, the first indication information is carried in a DCI in a DCI format of 1_1 or 1_2 with a downlink assignment, and the third DCI is the DCI in the DCI format of 1_1 or 1_2 with the downlink assignment; or, the first indication information is carried in a DCI in a DCI format of 1_1 or 1_2 with or without a downlink assignment, and the third DCI is a DCI in a DCI format other than 1_1and 1_2.

Further, in a case that the DCI where the third indication information is located is the DCI without the downlink assignment, a field used by the third indication information in the DCI in the DCI format of 1_1 or 1_2 without the downlink assignment includes at least one of:
a frequency domain resource assignment;
a time domain resource assignment;
a virtual resource block to physical resource block mapping;
a physical resource block binding size indicator;
a rate matching indicator;
a non-zero power CSI-RS triggering;
a HARQ process number;
a downlink assignment index;
a transmit power control command for a scheduled PUCCH;
a second TPC command for a scheduled PUCCH;
a PUCCH resource indicator;
a timing indicator from a PDSCH to a HARQ feedback;
a one-shot HARQ-ACK request;
an enhanced type 3 codebook indicator;
a PDSCH group index;
a new feedback indicator;
the number of requested PDSCH groups;
a HARQ-ACK retransmission indicator;
an antenna port;
a sounding reference signal (SRS) request;
a SRS offset indicator;
CGB transmission information;
CBG flushing out information (CBGFI);
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a newly added TCI state indication field: a third TCI state indication field.

In another case, that is, when the DCI where the third indication information is located is the DCI with the downlink assignment, a field used by the third indication information in the DCI in the DCI format of 1_1 or 1_2 with the downlink assignment includes at least one of the following:
a frequency domain resource assignment;
a time domain resource assignment;
a virtual resource block to physical resource block mapping;
a physical resource block binding size indicator;
a rate matching indicator;
a non-zero power CSI-RS triggering;
a HARQ process number;
a downlink assignment index;
a transmit power control command for a scheduled PUCCH;
a second TPC command for a scheduled PUCCH;
a PUCCH resource indicator;
a timing indicator from a PDSCH to a HARQ feedback;
a one-shot HARQ-ACK request;
an enhanced type 3 codebook indicator;
a PDSCH group index;
a new feedback indicator;
the number of requested PDSCH groups;
a HARQ-ACK retransmission indicator;
an antenna port;
a sounding reference signal (SRS) request;
a SRS offset indicator;
CGB transmission information;
CBG flushing out information (CBGFI);
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a newly added TCI state indication field: a third TCI state indication field.

In some embodiments, the third indication information is in the DCI in the DCI format of 1_1 or 1_2 with the downlink assignment, and the third indication information uses at least a part of bits or at least a part of code points of an existing information field.

For example, the existing information field used by the third indication information occupies at most 3 bits, the existing information occupies the first 2 bits of the 3 bits, and the third indication information occupies the last 1 bit of the 3 bits.

For another example, at most 6 bits may be used in a TDRA field. In a case that the TDRA needs to indicate the time domain resource assignment and the number of bits required for the time domain resource assignment is 4 (less than 6 bits), the remaining 2 bits in the TDRA field except the 4 bits occupied by the time domain resource assignment may be used to indicate the third indication information.

Optionally, the field used by the third indication information may be an existing information field, or a combination of an existing information field and a newly added information field. That is, in a case that the third indication information needs to use 3 bits, the 3 bits may be 3 bits corresponding to the existing information field; or, the 3 bits include a combination of X bits corresponding to the existing information field and Y bits corresponding to the newly added information field, where x+y=3, X>1 and Y>1; or, the 3 bits include 3 bits corresponding to the newly added information field.

For example, the field used by the third indication information is a TCI state indication field (up to 3 bits in the traditional case), or an enhanced TCI state indication field (enhanced to more than 3 bits), or a newly added second TCI state indication field (at least 1 bit).

In some embodiments, the third indication information is in the DCI in the DCI format of 1_1 or 1_2 with the downlink assignment, and the existing information field is also used to indicate the combination of the existing information and the third indication information.

For example, the communication protocol defines a table in advance, and the table includes at least one line of the existing information and the third indication information. As shown in Table 2 below, each row of the existing information and the third indication information forms a combination of the existing information and the third indication information, and each row is indicated by a different code point. For example, code point 00 indicates the first row in the table, that is, a combination of existing information 1 and third indication information 1. The bits in the existing information field are used to indicate one code point in the table, and a combination of the existing information and the third indication information may be determined by searching a corresponding row in the table through the code point.

**Table 2**

| Code point | Existing information | Third indication information |
|---|---|---|
| 00 | Existing information 1 | Third indication information 1 |
| 01 | Existing information 2 | Third indication information 2 |
| 10 | Existing information 3 | Third indication information 3 |
| 11 | Existing information 4 | Third indication information 4 |

In some embodiments, the third indication information is in the DCI in the DCI format of 1_1 or 1_2 without the downlink assignment, and the third indication information uses at least a part of the bits of the existing information field. That is, in a case that the field used by the third indication information does not need to indicate information related to the downlink assignment, all or part of the bits in this field are used to indicate the third indication information.

For example, the existing information field occupies 3 bits. In a case that the existing information field does not need to indicate the information related to the downlink assignment in this downlink assignment, all the 3 bits or at least one bit in this domain may be used to indicate the third indication information.

In another case, that is, when the third DCI is the DCI in the DCI format other than 1_1 and 1_2, an SS set type associated with the third DCI is a user equipment (UE) specific SS set or a common SS set.

In some embodiments, possible cases of the positions of the first indication information and the third indication information include: the first indication information is carried in the MAC CE and the third indication information is carried in the DCI; or, the first indication information is carried in DCI and the third indication information is carried in the MAC CE.

It should be noted that the updates of the first indication information and the third indication information are independent. That is, possible situations of information update include: the first indication information remains unchanged, and the third indication information changes; or, the first indication information changes, and the third indication information remains unchanged; or, both the first indication information and the third indication information changes.

3) In some embodiments with reference to Fig. 6, in step 2403, the terminal receives the second indication information and the third indication information.

The second indication information is used to indicate the second TCI state used in a case that the first PDCCH is received, and the second TCI state includes M TCI states. The third indication information is used to indicate the third TCI state used in a case that the second PDCCH is received, and the third TCI state includes L TCI states. The M TCI states are a subset of the N TCI states, and M is a positive integer not greater than N. The L TCI states are a subset of the N TCI states, and L is a positive integer not greater than N.

In some embodiments, the second indication information and the third indication information are the same indication information, that is, the M TCI states indicated by the same indication information are used for receiving both the first PDCCH and the second PDCCH. For example, the same indication information indicates the M TCI states, and the corresponding relationship between the M TCI states and the identification information may be determined according to the first indication information or the same indication information or the default mapping relationship, then the TCI states corresponding to the reception of the first PDCCH may be determined according to the identification information corresponding to the SS sets or the CORESETs corresponding to at least two PDCCH candidates included in the reception of the first PDCCH. The TCI states corresponding to the reception of the second PDCCH may be determined according to the identification information corresponding to the SS set or the CORESET corresponding to one PDCCH candidate included in the reception of the first PDCCH. The identification information includes the CORESETPoolIndex or the CORESET group ID or the SS set group ID or the PDCCH group ID described above.

In some embodiments, a MAC CE where the second indication information is located and a MAC CE where the third indication information is located are the same or different; or, a DCI where the second indication information is located and a DCI where the third indication information is located are the same or different.

Further, in a case that the MAC CE where the second indication information is located and the MAC CE where the third indication information is located are the same, the MAC CE is used to indicate M TCI states or L TCI states corresponding to each of different CORESETs or SS sets. That is, the MAC CE contains both corresponding information related to the M TCI states and corresponding information related to the L TCI states.

Further, in a case that the DCI where the second indication information is located and the DCI where the third indication information is located are the same, the DCI is used to indicate M TCI states or L TCI states corresponding to each of different CORESETs or SS sets. That is, the DCI contains both corresponding information related to the M TCI states and corresponding information related to the L TCI states.

It should be noted that possible cases of the positions of the second indication information and the third indication information, except being carried in the same or different MAC CEs or in the same or different DCIs as described above, also include: the second indication information is carried in the MAC CE and the third indication information is carried in the DCI; or, the second indication information is carried in DCI and the third indication information is carried in MAC CE.

In some embodiments, the MAC CE or DCI where the target indication information is located is also used to indicate a fourth TCI state of at least one channel, and the at least one channel includes at least one of: a physical uplink control channel (PUCCH), a physical uplink shared channel (PUSCH), and a physical downlink shared channel (PDSCH).

Further, in a case that the at least one channel includes the PDSCH, the fourth TCI state is a subset of the first TCI state; in a case that the at least one channel includes the PUCCH or the PUSCH, the first TCI state includes N joint TCI states and/or uplink TCI states, and the fourth TCI state is a subset of the N joint TCI states and/or uplink TCI states. That is, the fourth TCI state is the same as the first TCI state; or, the fourth TCI state is a proper subset of the first TCI state, or the fourth TCI state is a proper subset of the N joint TCI states and/or uplink TCI states.

Further, the target indication information also indicates a PUCCH resource index.

In some embodiments, the target indication information is also used to indicate a fourth TCI state of at least one channel, and the at least one channel includes at least one of: a physical uplink control channel (PUCCH), a physical uplink shared channel (PUSCH), and a physical downlink shared channel (PDSCH). That is, the fourth TCI state is the same as the second TCI state or the third TCI state; or, in a case that the second TCI state or the third TCI state includes a downlink TCI state and the at least one channel is the PUCCH or the PUSCH, the fourth TCI state includes an uplink TCI state corresponding to the downlink TCI state.

In some embodiments, the target indication information includes at least one bandwidth part identity (BWP ID) and/or at least one component carrier identity (CC ID).

Further, in a case that the CC ID is a CC ID in a CC list, the target TCI state is applicable to all BWP on all CCs in the CC list. That is, the BWP ID may be ignored. The CC list is a list configured by the base station.

In some embodiments, the at least one BWP ID and/or the at least one CC ID corresponding to the target TCI state indicated by the target indication information are the same as a BWP ID and/or a CC ID corresponding to the N TCI states indicated by the first indication information.

It should be noted that the above target indication information/second indication information/third indication information may be sent a plurality of times, and the information indicated each time is independent. For example, the target indication information/second indication information/third indication information indicates the M-TRP transmission state in an i-th time of transmission, and indicates the S-TRP transmission state in a (i+1)-th time of transmission, where i is a positive integer. The present disclosure is not limited to this.

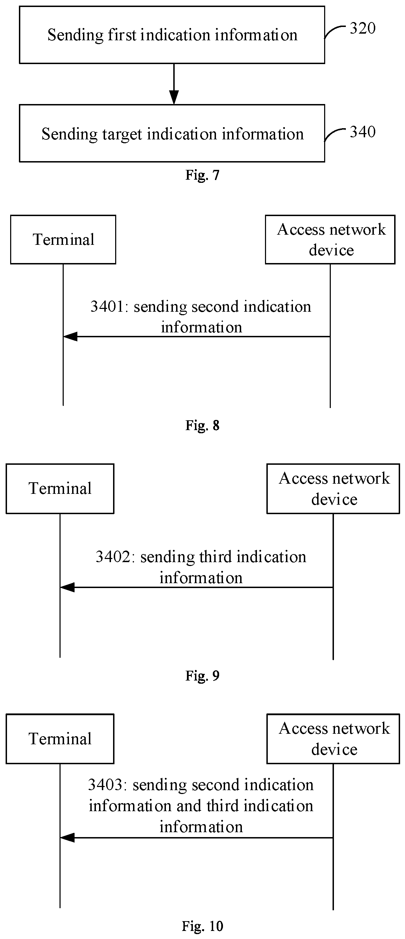

Fig. 7 shows a flow chart of a method for indicating a TCI state according to an embodiment of the present disclosure. The method may be applied to the access network device in the communication system shown in Fig. 2. The method includes the following steps.

In step 320, first indication information is sent.

The access network device sends the first indication information to the terminal.

The first indication information is used to indicate a first TCI state, the first TCI state includes N TCI states, and the TCI state includes a joint TCI state and/or a downlink TCI state, where N is an integer greater than 1. That is, the first indication information is used to indicate information of a plurality of joint/downlink TCI states. That is, the first indication information is used to indicate a unified TCI state of downlink channels and/or signals. Each TCI state of the N TCI states may be the joint TCI state or the downlink TCI state.

In some embodiments, the first indication information is carried in a first MAC CE, and the first MAC CE is used to indicate the N TCI states; or, the first indication information is carried in a second MAC CE and a first DCI, the second MAC CE is used to indicate N TCI states corresponding to each of at least two code points, and the first DCI is used to indicate one code point of the at least two code points.

In some embodiments, the first indication information further includes identification information corresponding to each TCI state, and the identification information is a control resource set pool index (CORESETPoolIndex) or a CORESET group ID or an SS set group ID or a PDCCH group ID; or, the first indication information includes the N TCI states, and each TCI state of the N TCI states has a default mapping relationship with identification information.

The access network device sends the first indication information to the terminal. For the relevant introduction of the first indication information, reference may be made to the descriptions of the above step 220, which will not be repeated here.

In step 340, target indication information is transmitted.

The access network device sends the target indication information to the terminal.

The target indication information is used to indicate a target TCI state used in a case that a target PDCCH is received, and the target TCI state is a subset of the first TCI state. The target TCI state is the first TCI state; or, the target TCI state is a proper subset of the first TCI state (a part of TCI states in the first TCI state). The target indication information is used to instruct the terminal to use all or part of the first TCI state to receive the target PDCCH. The target PDCCH may be a first PDCCH or a second PDCCH.

In some embodiments, the target indication information sent by the access network device is second indication information, and the second indication information is used to indicate a second TCI state used in a case that the first PDCCH is received. In some embodiments, the sent target indication information is third indication information, and the third indication information is used to indicate a third TCI state used in a case that the second PDCCH is received. In some embodiments, the sent target indication information includes the second indication information and the third indication information.

To sum up, the access network device sends the first indication information for indicating a plurality of sets of TCI states to the terminal, and then sends the target indication information for indicating the TCI state used when the PDCCH is received, thus realizing the dynamic switching between the M-TRP transmission state and the S-TRP transmission state, and improving the transmission flexibility of the PDCCH based on the unified TCI state.

In the following, sending the target indication information in step 340 will be described in different cases.

1) In some embodiments with reference to Fig. 8, in step 3401, the access network device sends the second indication information.

The second indication information is used to indicate the second TCI state used in a case that the first PDCCH is received. The second TCI state includes M TCI states, the M TCI states are a subset of the N TCI states, and M is a positive integer not greater than N. That is, the M TCI states are the same as the N TCI states, or the M TCI states are a proper subset of the N TCI states; That is, the M TCI states are all or part of the N TCI states.

In some embodiments, a reception of the first PDCCH includes at least two PDCCH candidates, and the SS sets corresponding to the at least two PDCCH candidates has a link relationship; each SS set has a corresponding control resource set (CORESET). The CORESET corresponding to each SS set may be the same or different.

In some embodiments, each SS set or each CORESET described above is configured with a TCI state. That is, each SS set or each CORESET has a corresponding identification information (ID), and the identification information has a corresponding relationship with the TCI state. The identification information is a CORESETPoolIndex or a CORESET group ID or an SS set group ID or a PDCCH group ID.

In some embodiments, the second indication information is used to indicate the TCI state corresponding to each SS set or each CORESET.

In some embodiments, the second indication information further includes identification information corresponding to the at least two PDCCH candidates and/or a corresponding relationship between the identification information and the M TCI states. The identification information is a CORESETPoolIndex or a CORESET group ID or an SS set group ID or a PDCCH group ID.

In some embodiments, the second indication information is carried in a third MAC CE. The third MAC CE is the same as or different from a MAC CE where the first indication information is located.

In some embodiments, the third MAC CE is used to indicate the N TCI states (contents of the first indication information) and the M TCI states (content of the second indication information) in a case that the third MAC CE is the same as the MAC CE carrying the first indication information. Optionally, the third MAC CE is also used to indicate a corresponding relationship between identification information and the N TCI states (optional content of the first indication information) and/or indicate a corresponding relationship between identification information and the M TCI states (optional content of the second indication information). The identification information is a CORESETPoolIndex or a CORESET group ID or an SS set group ID or a PDCCH group ID. For example, the third MAC CE is a unified TCI state activation/deactivation MAC CE, which is used to indicate both the first indication information and the second indication information.

In some embodiments, the second indication information is carried in a second DCI, and the second DCI is the same as or different from a DCI where the first indication information is located.

For example, the first indication information is carried in a DCI in a DCI format of 1_1 or 1_2 without a downlink assignment, and the second DCI is the DCI in the DCI format of 1_1 or 1_2 without the downlink assignment; or, the first indication information is carried in a DCI in a DCI format of 1_1 or 1_2 with a downlink assignment, and the second DCI is a DCI in the DCI format of 1_1 or 1_2 without the downlink assignment; or, the first indication information is carried in a DCI in a DCI format of 1_1 or 1_2 without a downlink assignment, and the second DCI is a DCI in the DCI format of 1_1 or 1_2 with the downlink assignment; or, the first indication information is carried in a DCI in a DCI format of 1_1 or 1_2 with a downlink assignment, and the second DCI is the DCI in the DCI format of 1_1 or 1_2 with the downlink assignment; or, the first indication information is carried in a DCI in a DCI format of 1_1 or 1_2 with or without a downlink assignment, and the second DCI is a DCI in a DCI format other than 1_1 and 1_2.

For example, in a case that the DCI where the second indication information is located is the DCI without the downlink assignment, a field used by the second indication information in the DCI in the DCI format of 1_1 or 1_2 without the downlink assignment includes at least one of:
a frequency domain resource assignment (FDRA);
a time domain resource assignment (TDRA);
a virtual resource block to physical resource block mapping (VRB-to-PRB mapping);
a physical resource block binding size indicator (PRB bundling size indicator);
a rate matching indicator;
a non-zero power channel state information reference signal (CSI-RS) triggering;
a hybrid automatic repeat request (HARQ) process number;
a downlink assignment index;
a transmit power control (TPC) command for a scheduled physical uplink control channel (PUCCH);
a second TPC command for a scheduled PUCCH;
a PUCCH resource indicator;
a timing indicator form a physical downlink shared channel (PDSCH) to a HARQ feedback (PDSCH-to-HARQ feedback timing indicator);
a one-shot hybrid automatic repeat request acknowledgement (HARQ-ACK) request;
an enhanced type 3 codebook indicator;
a PDSCH group index;
a new feedback indicator;
the number of requested PDSCH groups;
a HARQ-ACK retransmission indicator;
an antenna port;
a sounding reference signal (SRS) request;
a SRS offset indicator (CBGFI);
code block group (CGB) transmission information;
CBG flushing out information;
a demodulation reference signal (DMRS) sequence initialization;
a priority indicator;
a channel access-cyclic prefix;
a minimum applicable scheduling offset indicator;
a secondary cell (SCell) dormancy indication;
a PDCCH monitoring adaptation indication;
a PUCCH cell indicator;
a redundancy version;
a TCI state indication field;
an enhanced TCI state indication field; and
a newly added TCI state indication field: a second TCI state indication field.

In another case, that is, when the DCI where the second indication information is located is the DCI with the downlink assignment, a field used by the second indication information in the DCI in the DCI format of 1_1 or 1_2 with the downlink assignment includes at least one of:
a frequency domain resource assignment;
a time domain resource assignment;
a virtual resource block to physical resource block mapping;
a physical resource block binding size indicator;
a rate matching indicator;
a non-zero power CSI-RS triggering;
a HARQ process number;
a downlink assignment index;
a transmit power control (TPC) command for a scheduled PUCCH;
a second TPC command for a scheduled PUCCH;
a PUCCH resource indicator;
a timing indicator from a PDSCH to a HARQ feedback;
a one-shot HARQ-ACK request;
an enhanced type 3 codebook indicator;
a PDSCH group index;
a new feedback indicator;
the number of requested PDSCH groups;
a HARQ-ACK retransmission indicator;
an antenna port;
a sounding reference signal (SRS) request;
a SRS offset indicator;
CGB transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a newly added TCI state indication field: a second TCI state indication field.

In another case, that is, when the second DCI is the DCI in the DCI format other than 1_1 and 1_2, an SS set type associated with the second DCI is a user equipment (UE) specific SS Set or a common SS set.

In some embodiments, the second indication information is in the DCI in the DCI format of 1_1 or 1_2 with the downlink assignment, and the second indication information uses at least a part of bits or at least a part of code points in an existing information field; or, the second indication information is in the DCI in the DCI format of 1_1 or 1_2 with the downlink assignment, and an existing information field is used to indicate a combination of existing information and the second indication information; or, the second indication information is in the DCI in the DCI format of 1_1 or 1_2 without the downlink assignment, and the second indication information uses at least a part of bits in an existing information field.

The access network device sends the second indication information to the terminal. For the relevant introduction of the second indication information, reference may be made to the descriptions of the above step 2401, which will not be repeated here.

2) In some embodiments with reference to Fig. 9, in step 3402, the access network device sends the third indication information.

The third indication information is used to indicate the third TCI state used when the second PDCCH is received. The third TCI state includes L TCI states, the L TCI states are a subset of the N TCI states, and L is a positive integer not greater than N. That is, the L TCI states are the same as the N TCI states, or the L TCI states are a proper subset of the N TCI states. That is, the L TCI states are all or part of the N TCI states.

In some embodiments, a reception of the second PDCCH includes one PDCCH candidate, and an SS set or CORESET corresponding to the PDCCH candidate is configured with at least one TCI state.

In some embodiments, the reception of the second PDCCH is configured as a transmission scheme based a SFN, and the number of the at least one TCI state is greater than or equal to 1. Further, the transmission scheme based on the SFN includes SFN scheme A or SFN scheme B.

In some embodiments, the third indication information is carried in a fourth MAC CE, and the fourth MAC CE is the same as or different from a MAC CE where the first indication information is located.

In some embodiments, the third indication information is carried in a third DCI, and the third DCI is the same as or different from the first DCI.

In some embodiments, the first indication information is carried in a DCI in a DCI format of 1_1 or 1_2 without a downlink assignment, and the third DCI is the DCI in the DCI format of 1_1 or 1_2 without the downlink assignment; or, the first indication information is carried in a DCI in a DCI format of 1_1 or 1_2 with a downlink assignment, and the third DCI is a DCI in the DCI format of 1_1 or 1_2 without the downlink assignment; or, the first indication information is carried in a DCI in a DCI format of 1_1 or 1_2 without a downlink assignment, and the third DCI is a DCI in the DCI format of 1_1 or 1_2 with the downlink assignment; or, the first indication information is carried in a DCI in a DCI format of 1_1 or 1_2 with a downlink assignment, and the third DCI is the DCI in the DCI format of 1_1 or 1_2 with the downlink assignment; or, the first indication information is carried in a DCI in a DCI format of 1_1 or 1_2 with or without a downlink assignment, and the third DCI is a DCI in a DCI format other than 1_1and 1_2.

Further, in a case that the DCI where the third indication information is located is the DCI without the downlink assignment, a field used by the third indication information in the DCI in the DCI format of 1_1 or 1_2 without the downlink assignment includes at least one of:
a frequency domain resource assignment;
a time domain resource assignment;
a virtual resource block to physical resource block mapping;
a physical resource block binding size indicator;
a rate matching indicator;
a non-zero power CSI-RS triggering;
a HARQ process number;
a downlink assignment index;
a transmit power control (TPC) command for a scheduled PUCCH;
a second TPC command for a scheduled PUCCH;
a PUCCH resource indicator;
a timing indicator from a PDSCH to a HARQ feedback;
a one-shot HARQ-ACK request;
an enhanced type 3 codebook indicator;
a PDSCH group index;
a new feedback indicator;
the number of requested PDSCH groups;
a HARQ-ACK retransmission indicator;
an antenna port;
a sounding reference signal (SRS) request;
a SRS offset indicator;
CGB transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field;
a newly added TCI state indication field: a third TCI state indication field.

In another case, that is, when the DCI where the third indication information is located is the DCI with the downlink assignment, a field used by the third indication information in the DCI in the DCI format of 1_1 or 1_2 with the downlink assignment includes at least one of:
a frequency domain resource assignment;
a time domain resource assignment;
a virtual resource block to physical resource block mapping;
a physical resource block binding size indicator;
a rate matching indicator;
a non-zero power CSI-RS triggering;
a HARQ process number;
a downlink assignment index;
a transmit power control (TPC) command for a scheduled PUCCH;
a second TPC command for a scheduled PUCCH;
a PUCCH resource indicator;
a timing indicator from a PDSCH to a HARQ feedback;
a one-shot HARQ-ACK request;
an enhanced type 3 codebook indicator;
a PDSCH group index;
a new feedback indicator;
the number of requested PDSCH groups;
a HARQ-ACK retransmission indicator;
an antenna port;
a sounding reference signal (SRS) request;
a SRS offset indicator;
CGB transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field;
a newly added TCI state indication field: a third TCI state indication field.

In another case, that is, when the third DCI is the DCI in the DCI format other than 1_1 and 1_2, an SS set type associated with the third DCI is a user equipment (UE) specific SS set or a common SS set.

The access network device sends the third indication information to the terminal. For the relevant introduction of the third indication information, reference may be made to the descriptions of the above step 2402, which will not be repeated here.

3) In some embodiments with reference to Fig. 10, in step 3403, the access network device sends the second indication information and the third indication information.

The second indication information is used to indicate the second TCI state used when the first PDCCH is received, and the second TCI state includes M TCI states. The third indication information is used to indicate the third TCI state used when the second PDCCH is received, and the third TCI state includes L TCI states. The M TCI states are a subset of the N TCI states, and M is a positive integer not greater than N. The L TCI states are a subset of the N TCI states, and L is a positive integer not greater than N.

In some embodiments, the second indication information and the third indication information are the same indication information, that is, the M TCI states indicated by the same indication information are used for receiving both the first PDCCH and the second PDCCH. For example, the same indication information indicates the M TCI states, and the corresponding relationship between the M TCI states and the identification information may be determined according to the first indication information or the same indication information or the default mapping relationship, then the TCI states corresponding to the reception of the first PDCCH may be determined according to the identification information corresponding to the SS sets or CORESETs corresponding to at least two PDCCH candidates included in the reception of the first PDCCH. The TCI states corresponding to the reception of the second PDCCH may be determined according to the identification information corresponding to the SS set or CORESET corresponding to one PDCCH candidate included in the reception of the first PDCCH. The identification information is the CORESETPoolIndex or the CORESET group ID or the SS set group ID or the PDCCH group ID described above.

In some embodiments, a MAC CE where the second indication information is located and a MAC CE where the third indication information is located are the same or different; or, a DCI where the second indication information is located and a DCI where the third indication information is located are the same or different.

Further, in a case that the MAC CE where the second indication information is located and the MAC CE where the third indication information is located are the same, the MAC CE is used to indicate M TCI states or L TCI states corresponding to each of different CORESETs or SS sets. That is, the MAC CE contains both corresponding information related to the M TCI states and corresponding information related to the L TCI states.

Further, in a case that the DCI where the second indication information is located and the DCI where the third indication information is located are the same, the DCI is used to indicate M TCI states or L TCI states corresponding to each of different CORESETs or SS sets. That is, the DCI contains both corresponding information related to the M TCI states and corresponding information related to the L TCI states.

The access network device sends the second indication information and the third indication information to the terminal. For the relevant introduction of the second indication information and the third indication information, reference may be made to the descriptions of the above step 2403, which will not be repeated here.

In some embodiments, the MAC CE or DCI where the target indication information is located is also used to indicate a fourth TCI state of at least one channel, and the at least one channel includes at least one of: a physical uplink control channel (PUCCH), a physical uplink shared channel (PUSCH), and a physical downlink shared channel (PDSCH).

Further, in a case that the at least one channel includes the PDSCH, the fourth TCI state is a subset of the first TCI state; in a case that the at least one channel includes the PUCCH or the PUSCH, the first TCI state includes N joint TCI states and/or uplink TCI states, and the fourth TCI state is a subset of the N joint TCI states and/or uplink TCI states. That is, the fourth TCI state is the same as the first TCI state; or, the fourth TCI state is a proper subset of the first TCI state.

Further, the target indication information also indicates a PUCCH resource index.

In some embodiments, the target indication information is also used to indicate a fourth TCI state of at least one channel, and the at least one channel includes at least one of: a physical uplink control channel (PUCCH), a physical uplink shared channel (PUSCH), and a physical downlink shared channel (PDSCH). That is, the fourth TCI state is the same as the second TCI state or the third TCI state; or, in a case that the second TCI state or the third TCI state includes a downlink TCI state and the at least one channel is the PUCCH or the PUSCH, the fourth TCI state includes an uplink TCI state corresponding to the downlink TCI state.

In some embodiments, the target indication information includes at least one bandwidth part identity (BWP ID) and/or at least one component carrier identity (CC ID).

Further, in a case that the CC ID is a CC ID in a CC list, the target TCI state is applicable to all BWPs on all CCs in the CC list. That is, the BWP ID may be ignored. The CC list is a list configured by the base station.

In some embodiments, the at least one BWP ID and/or the at least one CC ID corresponding to the target TCI state indicated by the target indication information are the same as a BWP ID and/or a CC ID corresponding to the N TCI states indicated by the first indication information.

It should be noted that the above target indication information/second indication information/third indication information may be sent a plurality of times, and the information indicated each time is independent. For example, the target indication information/second indication information/third indication information indicates the M-TRP transmission state in an i-th time of transmission, and indicates the S-TRP transmission state in a (i+1)-th time of transmission, where i is a positive integer. The present disclosure is not limited to this.

It should be noted that the embodiments of the present disclosure include a plurality of optional steps, and each step includes at least one embodiment. Each step may be an independent embodiment; or, each step may be divided into a plurality of embodiments; or, a plurality of steps may constitute one embodiment. For example, the above step 240 may constitute one embodiment alone; or, the step 240 may also be divided into a plurality of embodiments in the above multiple possible embodiments; or, step 320 and step 3401 constitute one embodiment together, and so on. The present disclosure does not make any specific limitation to this.

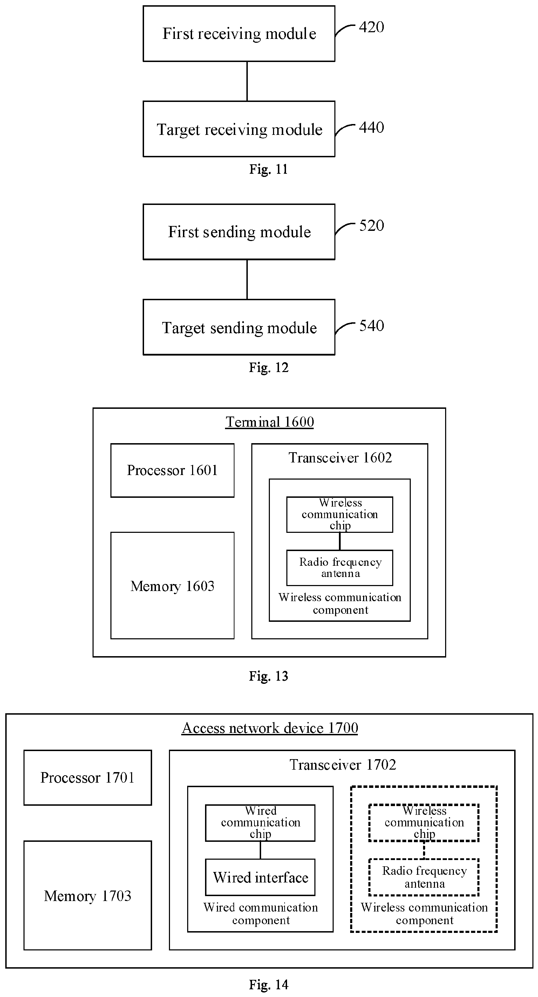

Fig. 11 is a block diagram of an apparatus for indicating a TCI state according to an illustrative embodiment of the present disclosure. As shown in Fig. 11, the apparatus includes:
a first receiving module 420 configured to receive first indication information, in which the first indication information is used to indicate a first TCI state, the first TCI state includes N TCI states, and the TCI states include a joint TCI state and/or a downlink TCI state, in which N is an integer greater than 1; and
a target receiving module 440 configured to receive target indication information, in which the target indication information is used to indicate a target TCI state used in a case that a target physical downlink control channel (PDCCH) is received, and the target TCI state is a subset of the first TCI state.

In a possible design, the target receiving module 440 is configured to: receive second indication information, in which the second indication information is used to indicate a second TCI state used in a case that a first PDCCH is received, and the second TCI state includes M TCI states; or, receive third indication information, in which the third indication information is used to indicate a third TCI state used in a case that a second PDCCH is received, and the third TCI state includes L TCI states; or, receive second indication information and third indication information, in which the M TCI states are a subset of the N TCI states, M is a positive integer not greater than n, the L TCI states are a subset of the N TCI states, and L is a positive integer not greater than N.

In a possible design, a reception of the first PDCCH includes at least two PDCCH candidates, search space sets (SS sets) corresponding to the at least two PDCCH candidates have a link relationship, and each SS set has a corresponding control resource set (CORESET).

In a possible design, each SS set or each CORESET has a corresponding identification information (ID), and the identification information is a control resource set pool index (CORESETPoolIndex) or a CORESET group ID or an SS set group ID or a PDCCH group ID.

In a possible design, the first indication information is carried in a first medium access control control element (MAC CE), and the first MAC CE is used to indicate the N TCI states; or, the first indication information is carried in a second MAC CE and a first DCI, the second MAC CE is used to indicate N TCI states corresponding to each of at least two code points, and the first DCI is used to indicate one code point of the at least two code points.

In a possible design, the first indication information includes identification information (ID) corresponding to each TCI state, and the identification information is a CORESETPoolIndex or a CORESET group ID or an SS set group ID or a PDCCH group ID; or, the first indication information includes the N TCI states, and each TCI state of the N TCI states has a default mapping relationship with identification information.

In a possible design, the second indication information includes identification information (ID) corresponding to the at least two PDCCH candidates and/or a corresponding relationship between identification information and the M TCI states. The identification information is a CORESETPoolIndex or a CORESET group ID or an SS set group ID or a PDCCH group ID.

In a possible design, the second indication information is carried in a third MAC CE, and the third MAC CE is the same as or different from a MAC CE where the first indication information is located.

In a possible design, in a case that the third MAC CE is the same as the MAC CE carrying the first indication information, the third MAC CE is used to indicate the N TCI states, the M TCI states and a corresponding relationship between identification information and the M TCI states. The identification information is a CORESETPoolIndex or a CORESET group ID or an SS set group ID or a PDCCH group ID.

In a possible design, the second indication information is carried in a second DCI, and the second DCI is the same as or different from a DCI where the first indication information is located.

In a possible design, the first indication information is carried in a DCI in a DCI format of 1_1 or 1_2 without a downlink assignment, and the second DCI is the DCI in the DCI format of 1_1 or 1_2 without the downlink assignment; or, the first indication information is carried in a DCI in a DCI format of 1_1 or 1_2 with a downlink assignment, and the second DCI is a DCI in the DCI format of 1_1 or 1_2 without the downlink assignment; or, the first indication information is carried in a DCI in a DCI format of 1_1 or 1_2 without a downlink assignment, and the second DCI is a DCI in the DCI format of 1_1 or 1_2 with the downlink assignment; or, the first indication information is carried in a DCI in a DCI format of 1_1 or 1_2 with a downlink assignment, and the second DCI is the DCI in the DCI format of 1_1 or 1_2 with the downlink assignment; or, the first indication information is carried in a DCI in a DCI format of 1_1 or 1_2 with or without a downlink assignment, and the second DCI is a DCI in a DCI format other than 1_1and 1_2.

In a possible design, a field used by the second indication information in the DCI in the DCI format of 1_1 or 1_2 without the downlink assignment includes at least one of: a frequency domain resource assignment; a time domain resource assignment; a virtual resource block to physical resource block mapping; a physical resource block binding size indicator; a rate matching indicator; a non-zero power channel state information reference signal (CSI-RS) triggering; a hybrid automatic repeat request (HARQ) process number; a downlink assignment index; a transmit power control command for a scheduled physical uplink control channel (PUCCH); a second transmit power control command for a scheduled PUCCH; a PUCCH resource indicator; a timing indicator form a physical downlink shared channel (PDSCH) to a HARQ feedback; a one-shot hybrid automatic repeat request acknowledgement (HARQ-ACK) request; an enhanced type 3 codebook indicator; a PDSCH group index; a new feedback indicator; the number of requested PDSCH groups; a HARQ-ACK retransmission indicator; an antenna port; a sounding reference signal (SRS) request; a SRS offset indicator; code block group (CGB) transmission information; CBG flushing out information; a demodulation reference signal (DMRS) sequence initialization; a priority indicator; a channel access-cyclic prefix (CP); a minimum applicable scheduling offset indicator; a secondary cell dormancy indication; a PDCCH monitoring adaptation indication; a PUCCH cell indicator; a redundancy version; a TCI state indication field; an enhanced TCI state indication field; and a second TCI state indication field.

In a possible design, a field used by the second indication information in the DCI in the DCI format of 1_1 or 1_2 with the downlink assignment includes at least one of: a frequency domain resource assignment; a time domain resource assignment; a virtual resource block to physical resource block mapping; a physical resource block binding size indicator; a rate matching indicator; a non-zero power CSI-RS triggering; a HARQ process number; a downlink assignment index; a transmit power control command for a scheduled PUCCH; a second transmit power control command for a scheduled PUCCH; a PUCCH resource indicator; a timing indicator from a PDSCH to a HARQ feedback; a one-shot HARQ-ACK request; an enhanced type 3 codebook indicator; a PDSCH group index; a new feedback indicator; the number of requested PDSCH groups; a HARQ-ACK retransmission indicator; an antenna port; a sounding reference signal (SRS) request; a SRS offset indicator; CGB transmission information; CBG flushing out information (CBGFI); a DMRS sequence initialization; a priority indicator; a channel access CP; a minimum applicable scheduling offset indicator; a secondary cell dormancy indication; a PDCCH monitoring adaptation indication; a PUCCH cell indicator; a redundancy version; a TCI state indication field; an enhanced TCI state indication field; and a second TCI state indication field.

In a possible design, in a case that the second DCI is the DCI in the DCI format other than 1_1 and 1_2, an SS set type associated with the second DCI is a user equipment specific SS set or a common SS set.

In a possible design, a reception of the second PDCCH includes one PDCCH candidate, and an SS set or CORESET corresponding to the PDCCH candidate is configured with at least one TCI state.

In a possible design, the reception of the second PDCCH is configured as a transmission scheme based on a single-frequency network (SFN), and the number of the at least one TCI state is greater than or equal to 1.

In a possible design, the transmission scheme based on the SFN includes: SFN scheme A; or, SFN scheme B.

In a possible design, the third indication information is carried in a fourth MAC CE, and the fourth MAC CE is the same as or different from a MAC CE where the first indication information is located.

In a possible design, the third indication information is carried in a third DCI, and the third DCI is the same as or different from the first DCI.

In a possible design, the first indication information is carried in a DCI in a DCI format of 1_1 or 1_2 without a downlink assignment, and the third DCI is the DCI in the DCI format of 1_1 or 1_2 without the downlink assignment; or, the first indication information is carried in a DCI in a DCI format of 1_1 or 1_2 with a downlink assignment, and the third DCI is a DCI in the DCI format of 1_1 or 1_2 without the downlink assignment; or, the first indication information is carried in a DCI in a DCI format of 1_1 or 1_2 without a downlink assignment, and the third DCI is a DCI in the DCI format of 1_1 or 1_2 with the downlink assignment; or, the first indication information is carried in a DCI in a DCI format of 1_1 or 1_2 with a downlink assignment, and the third DCI is the DCI in the DCI format of 1_1 or 1_2 with the downlink assignment; or, the first indication information is carried in a DCI in a DCI format of 1_1 or 1_2 with or without a downlink assignment, and the third DCI is a DCI in a DCI format other than 1_1 and 1_2.

In a possible design, a field used by the third indication information in the DCI in the DCI format of 1_1 or 1_2 without the downlink assignment includes at least one of: a frequency domain resource assignment; a time domain resource assignment; a virtual resource block to physical resource block mapping; a physical resource block binding size indicator; a rate matching indicator; a non-zero power CSI-RS triggering; a HARQ process number; a downlink assignment index; a transmit power control command for a scheduled PUCCH; a second transmit power control command for a scheduled PUCCH; a PUCCH resource indicator; a timing indicator from a PDSCH to a HARQ feedback; a one-shot HARQ-ACK request; an enhanced type 3 codebook indicator; a PDSCH group index; a new feedback indicator; the number of requested PDSCH groups; a HARQ-ACK retransmission indicator; an antenna port; a sounding reference signal (SRS) request; a SRS offset indicator; CGB transmission information; CBG flushing out information; a DMRS sequence initialization; a priority indicator; a channel access CP; a minimum applicable scheduling offset indicator; a secondary cell dormancy indication; a PDCCH monitoring adaptation indication; a PUCCH cell indicator; a redundancy version; a TCI state indication field; an enhanced TCI state indication field; a third TCI state indication field.

In a possible design, a field used by the third indication information in the DCI in the DCI format of 1_1 or 1_2 with the downlink assignment includes at least one of: a frequency domain resource assignment; a time domain resource assignment; a virtual resource block to physical resource block mapping; a physical resource block binding size indicator; a rate matching indicator; a non-zero power CSI-RS triggering; a HARQ process number; a downlink assignment index; a transmit power control command for a scheduled PUCCH; a second transmit power control command for a scheduled PUCCH; a PUCCH resource indicator; a timing indicator from a PDSCH to a HARQ feedback; a one-shot HARQ-ACK request; an enhanced type 3 codebook indicator; a PDSCH group index; a new feedback indicator; the number of requested PDSCH groups; a HARQ-ACK retransmission indicator; an antenna port; a sounding reference signal (SRS) request; a SRS offset indicator; CGB transmission information; CBG flushing out information; a DMRS sequence initialization; a priority indicator; a channel access CP; a minimum applicable scheduling offset indicator; a secondary cell dormancy indication; a PDCCH monitoring adaptation indication; a PUCCH cell indicator; a redundancy version; a TCI state indication field; an enhanced TCI state indication field; a third TCI state indication field.

In a possible design, in a case that the third DCI is the DCI in the DCI format other than 1_1 and 1_2, an SS set type associated with the third DCI is a user equipment specific SS set or a common SS set.

In a possible design, a MAC CE where the second indication information is located and a MAC CE where the third indication information is located are the same or different; or, a DCI where the second indication information is located and a DCI where the third indication information is located are the same or different.

In a possible design, in a case that the MAC CE where the second indication information is located and the MAC CE where the third indication information is located are the same, the MAC CE is used to indicate the M TCI states or the L TCI states corresponding to each of different CORESETs or SS sets.

In a possible design, in a case that the DCI where the second indication information is located and the DCI where the third indication information is located are the same, the DCI is used to indicate the M TCI states or the L TCI states corresponding to each of different CORESETs or SS sets.

In a possible design, the target indication information is also used to indicate a fourth TCI state of at least one channel, and the at least one channel includes at least one of: a physical uplink control channel (PUCCH), a physical uplink shared channel (PUSCH), and a physical downlink shared channel (PDSCH). That is, the fourth TCI state is the same as the second TCI state or the third TCI state; or, in a case that the second TCI state or the third TCI state includes a downlink TCI state and the at least one channel is the PUCCH or the PUSCH, the fourth TCI state includes an uplink TCI state corresponding to the downlink TCI state.

In a possible design, a MAC CE or a DCI where the target indication information is located is also used to indicate a fourth TCI state of at least one channel, and the at least one channel includes at least one of: a physical uplink control channel (PUCCH), a physical uplink shared channel (PUSCH), a physical downlink shared channel (PDSCH).

In a possible design, the fourth TCI state is a subset of the first TCI state in a case that the at least one channel includes the PDSCH; or, in a case that the at least one channel includes the PUCCH or the PUSCH, the first TCI state includes N joint TCI states and/or uplink TCI states, and the fourth TCI state is a subset of the N joint TCI states and/or uplink TCI states.

In a possible design, the target indication information includes at least one bandwidth part identity (BWP ID) and/or at least one component carrier identity (CC ID).

In a possible design, in a case that the CC ID is a CC ID in a CC list, the target TCI state is applicable to all BWPs on all CCs in the CC list.

In a possible design, at least one BWP ID and/or at least one CC ID corresponding to the target TCI state indicated by the target indication information are the same as a BWP ID and/or a CC ID corresponding to the N TCI states indicated by the first indication information.

Fig. 12 is a block diagram of an apparatus for indicating a TCI state according to an illustrative embodiment of the present disclosure. As shown in Fig. 12, the apparatus includes:
a first sending module 520 configured to send first indication information, in which the first indication information is used to indicate a first TCI state, and the first TCI state includes N TCI states, and the TCI states include a joint TCI state and/or a downlink TCI state, in which N is an integer greater than 1; and
a target sending module 540 configured to send target indication information, in which the target indication information is used to indicate a target TCI state used in a case that a target physical downlink control channel (PDCCH) is received, and the target TCI state is a subset of the first TCI state.

In a possible design, the target sending module 540 is configured to: send second indication information, in which the second indication information is used to indicate a second TCI state used in a case that a first PDCCH is received, and the second TCI state includes M TCI states; or, send third indication information, in which the third indication information is used to indicate a third TCI state used in a case that a second PDCCH is received, and the third TCI state includes L TCI states; or, send the second indication information and the third indication information. The M TCI states are a subset of the N TCI states, M is a positive integer not greater than N, the L TCI states are a subset of the N TCI states, and L is a positive integer not greater than N.

In a possible design, a reception of the first PDCCH includes at least two PDCCH candidates, and search space sets (SS sets) corresponding to the at least two PDCCH candidates have a link relationship; each SS set has a corresponding control resource set (CORESET).

In a possible design, each SS set or each CORESET has a corresponding identification information (ID), and the identification information is a control resource set pool index (CORESETPoolIndex) or a CORESET group ID or an SS set group ID or a PDCCH group ID.

In a possible design, the first indication information is carried in a first medium access control control element (MAC CE), and the first MAC CE is used to indicate the N TCI states; or, the first indication information is carried in a second MAC CE and a first DCI, the second MAC CE is used to indicate N TCI states corresponding to each of at least two code points, and the first DCI is used to indicate one code point of the at least two code points.

In a possible design, the first indication information includes identification information (ID) corresponding to each TCI state, and the identification information is a CORESETPoolIndex or a CORESET group ID or an SS set group ID or a PDCCH group ID; or, the first indication information includes the N TCI states, and each TCI state of the N TCI states has a default mapping relationship with identification information.

In a possible design, the second indication information includes identification information corresponding to the at least two PDCCH candidates and/or a corresponding relationship between the identification information and the M TCI states. The identification information is a CORESETPoolIndex or a CORESET group ID or an SS set group ID or a PDCCH group ID.

In a possible design, the second indication information is carried in a third MAC CE, and the third MAC CE is the same as or different from a MAC CE where the first indication information is located.

In a possible design, in a case that the third MAC CE is the same as the MAC CE carrying the first indication information, the third MAC CE is used to indicate the N TCI states, the M TCI states and a corresponding relationship between identification information and the M TCI states. The identification information is a CORESETPoolIndex or a CORESET group ID or an SS set group ID or a PDCCH group ID.

In a possible design, the second indication information is carried in a second DCI, and the second DCI is the same as or different from a DCI where the first indication information is located.

In a possible design, the first indication information is carried in a DCI in a DCI format of 1_1 or 1_2 without a downlink assignment, and the second DCI is the DCI in the DCI format of 1_1 or 1_2 without the downlink assignment; or, the first indication information is carried in a DCI in a DCI format of 1_1 or 1_2 with a downlink assignment, and the second DCI is a DCI in the DCI format of 1_1 or 1_2 without the downlink assignment; or, the first indication information is carried in a DCI in a DCI format of 1_1 or 1_2 without a downlink assignment, and the second DCI is a DCI in the DCI format of 1_1 or 1_2 with the downlink assignment; or, the first indication information is carried in a DCI in a DCI format of 1_1 or 1_2 with a downlink assignment, and the second DCI is the DCI in the DCI format of 1_1 or 1_2 with the downlink assignment; or, the first indication information is carried in a DCI in a DCI format of 1_1 or 1_2 with or without a downlink assignment, and the second DCI is a DCI in a DCI format other than 1_1 and 1_2.

In a possible design, a field used by the second indication information in the DCI with the DCI format of 1_1 or 1_2 without the downlink assignment includes at least one of: a frequency domain resource assignment; a time domain resource assignment; a virtual resource block to physical resource block mapping; a physical resource block binding size indicator; a rate matching indicator; a non-zero power channel state information reference signal (CSI-RS) triggering; a hybrid automatic repeat request (HARQ) process number; a downlink assignment index; a transmit power control command for a scheduled physical uplink control channel (PUCCH); a second transmit power control command for a scheduled PUCCH; a PUCCH resource indicator; a timing indicator form a physical downlink shared channel (PDSCH) to a HARQ feedback; a one-shot hybrid automatic repeat request acknowledgement (HARQ-ACK) request; an enhanced type 3 codebook indicator; a PDSCH group index; a new feedback indicator; the number of requested PDSCH groups; a HARQ-ACK retransmission indicator; an antenna port; a sounding reference signal (SRS) request; a SRS offset indicator; code block group (CGB) transmission information; CBG flushing out information; a demodulation reference signal (DMRS) sequence initialization; a priority indicator; a channel access-cyclic prefix (CP); a minimum applicable scheduling offset indicator; a secondary cell dormancy indication; a PDCCH monitoring adaptation indication; a PUCCH cell indicator; a redundancy version; a TCI state indication field; an enhanced TCI state indication field; and a second TCI state indication field.

In a possible design, a field used by the second indication information in the DCI in the DCI format of 1_1 or 1_2 with the downlink assignment includes at least one of: a frequency domain resource assignment; a time domain resource assignment; a virtual resource block to physical resource block mapping; a physical resource block binding size indicator; a rate matching indicator; a non-zero power CSI-RS triggering; a HARQ process number; a downlink assignment index; a transmit power control command for a scheduled PUCCH; a second transmit power control command for a scheduled PUCCH; a PUCCH resource indicator; a timing indicator from a PDSCH to a HARQ feedback; a one-shot HARQ-ACK request; an enhanced type 3 codebook indicator; a PDSCH group index; a new feedback indicator; the number of requested PDSCH groups; a HARQ-ACK retransmission indicator; an antenna port; a sounding reference signal (SRS) request; a SRS offset indicator; CGB transmission information; CBG flushing out information; a DMRS sequence initialization; a priority indicator; a channel access CP; a minimum applicable scheduling offset indicator; a secondary cell dormancy indication; a PDCCH monitoring adaptation indication; a PUCCH cell indicator; a redundancy version; a TCI state indication field; an enhanced TCI state indication field; and a second TCI state indication field.

In a possible design, in a case that the second DCI is the DCI in the DCI format other than 1_1 and 1_2, an SS set type associated with the second DCI is a user equipment specific SS set or a common SS set.

In a possible design, a reception of the second PDCCH includes one PDCCH candidate, and an SS set or a CORESET corresponding to the PDCCH candidate is configured with at least one TCI state.

In a possible design, the reception of the second PDCCH is configured as a transmission scheme based a single-frequency network (SFN), and the number of the at least one TCI state is greater than or equal to 1.

In a possible design, the transmission scheme based the SFN includes: SFN scheme A; or, SFN scheme B.

In a possible design, the third indication information is carried in a fourth MAC CE, and the fourth MAC CE is the same as or different from a MAC CE where the first indication information is located.

In a possible design, the third indication information is carried in a third DCI, and the third DCI is the same as or different from the first DCI.

In a possible design, the first indication information is carried in a DCI in a DCI format of 1_1 or 1_2 without a downlink assignment, and the third DCI is the DCI in the DCI format of 1_1 or 1_2 without the downlink assignment; or, the first indication information is carried in a DCI in a DCI format of 1_1 or 1_2 with a downlink assignment, and the third DCI is a DCI in the DCI format of 1_1 or 1_2 without the downlink assignment; or, the first indication information is carried in a DCI in a DCI format of 1_1 or 1_2 without a downlink assignment, and the third DCI is a DCI in the DCI format of 1_1 or 1_2 with the downlink assignment; or, the first indication information is carried in a DCI in a DCI format of 1_1 or 1_2 with a downlink assignment, and the third DCI is the DCI in the DCI format of 1_1 or 1_2 with the downlink assignment; or, the first indication information is carried in a DCI in a DCI format of 1_1 or 1_2 with or without a downlink assignment, and the third DCI is a DCI in a DCI format other than 1_1 and 1_2.

In a possible design, a field used by the third indication information in the DCI in the DCI format of 1_1 or 1_2 without the downlink assignment includes at least one of: a frequency domain resource assignment; a time domain resource assignment; a virtual resource block to physical resource block mapping; a physical resource block binding size indicator; a rate matching indicator; a non-zero power CSI-RS triggering; a HARQ process number; a downlink assignment index; a transmit power control command for a scheduled PUCCH; a second transmit power control command for a scheduled PUCCH; a PUCCH resource indicator; a timing indicator from a PDSCH to a HARQ feedback; a one-shot HARQ-ACK request; an enhanced type 3 codebook indicator; a PDSCH group index; a new feedback indicator; the number of requested PDSCH groups; a HARQ-ACK retransmission indicator; an antenna port; a sounding reference signal (SRS) request; a SRS offset indicator; CGB transmission information; CBG flushing out information; a DMRS sequence initialization; a priority indicator; a channel access CP; a minimum applicable scheduling offset indicator; a secondary cell dormancy indication; a PDCCH monitoring adaptation indication; a PUCCH cell indicator; a redundancy version; a TCI state indication field; an enhanced TCI state indication field; a third TCI state indication field.

In a possible design, a field used by the third indication information in the DCI in the DCI format of 1_1 or 1_2 with the downlink assignment includes at least one of: a frequency domain resource assignment; a time domain resource assignment; a virtual resource block to physical resource block mapping; a physical resource block binding size indicator; a rate matching indicator; a non-zero power CSI-RS triggering; a HARQ process number; a downlink assignment index; a transmit power control command for a scheduled PUCCH; a second transmit power control command for a scheduled PUCCH; a PUCCH resource indicator; a timing indicator from a PDSCH to a HARQ feedback; a one-shot HARQ-ACK request; an enhanced type 3 codebook indicator; a PDSCH group index; a new feedback indicator; the number of requested PDSCH groups; a HARQ-ACK retransmission indicator; an antenna port; a sounding reference signal (SRS) request; a SRS offset indicator; CGB transmission information; CBG flushing out information; a DMRS sequence initialization; a priority indicator; a channel access CP; a minimum applicable scheduling offset indicator; a secondary cell dormancy indication; a PDCCH monitoring adaptation indication; a PUCCH cell indicator; a redundancy version; a TCI state indication field; an enhanced TCI state indication field; a third TCI state indication field.

In a possible design, in a case that the third DCI is the DCI in the DCI format other than 1_1 and 1_2, an SS set type associated with the third DCI is a user equipment specific SS set or a common SS set.

In a possible design, a MAC CE where the second indication information is located and a MAC CE where the third indication information is located are the same or different; or, a DCI where the second indication information is located and a DCI where the third indication information is located are the same or different.

In a possible design, in a case that the MAC CE where the second indication information is located and the MAC CE where the third indication information is located are the same, the MAC CE is used to indicate the M TCI states or the L TCI states corresponding to each of different CORESETs or SS sets.

In a possible design, in a case that the DCI where the second indication information is located and the DCI where the third indication information is located are the same, the DCI is used to indicate the M TCI states or the L TCI states corresponding to each of different CORESETs or SS sets.

In a possible design, the target indication information is also used to indicate a fourth TCI state of at least one channel, and the at least one channel includes at least one of: a physical uplink control channel (PUCCH), a physical uplink shared channel (PUSCH), and a physical downlink shared channel (PDSCH). That is, the fourth TCI state is the same as the second TCI state or the third TCI state; or, in a case that the second TCI state or the third TCI state includes a downlink TCI state and the at least one channel is the PUCCH or the PUSCH, the fourth TCI state includes an uplink TCI state corresponding to the downlink TCI state.

In a possible design, a MAC CE or a DCI where the target indication information is located is also used to indicate a fourth TCI state of at least one channel, and the at least one channel includes at least one of: a physical uplink control channel (PUCCH), a physical uplink shared channel (PUSCH), and a physical downlink shared channel (PDSCH).

In a possible design, the fourth TCI state is a subset of the first TCI state in a case that the at least one channel includes the PDSCH; or, in a case that the at least one channel includes the PUCCH or the PUSCH, the first TCI state includes N joint TCI states and/or uplink TCI states, and the fourth TCI state is a subset of the N joint TCI states and/or uplink TCI states.

In a possible design, the target indication information includes at least one bandwidth part identity (BWP ID) and/or at least one component carrier identity (CC ID).

In a possible design, in a case that the CC ID is a CC ID in a CC list, the target TCI state is applicable to all BWPs on all CCs in the CC list.

In a possible design, at least one BWP ID and/or at least one CC ID corresponding to the target TCI state indicated by the target indication information are the same as a BWP ID and/or a CC ID corresponding to the N TCI states indicated by the first indication information.

Fig. 13 shows a schematic diagram of a terminal 1600 according to an embodiment of the present disclosure. The terminal 1600 may include a processor 1601, a transceiver 1602 and a memory 1603.

The processor 1601 includes one or more processing cores, and the processor 1601 executes various functional applications and information processing by running software programs and modules.

The transceiver 1602 may include a receiver and a transmitter. For example, the receiver and the transmitter may be implemented as the same wireless communication component, which may include a wireless communication chip and a radio frequency antenna.

The memory 1603 may be connected to the processor 1601 and the transceiver 1602.

The memory 1603 may be used to store a computer program executed by the processor, and the processor 1601 is used to execute the computer program to realize the steps executed by the terminal in the wireless communication system in the above method embodiments.

In addition, the memory 1603 may be realized by any type of volatile or non-volatile memory device or a combination thereof, including, but not limited to: a magnetic disk or an optical disk, an electrically erasable programmable read-only memory, an erasable programmable read-only memory, a static random access memory, a read-only memory, a magnetic memory, a flash memory and a programmable read-only memory.

The process executed by the transceiver 1602 may refer to the steps executed by the terminal in the above methods.

Fig. 14 shows a schematic diagram of an access network device 1700 according to an embodiment of the present disclosure. The network device 1700 may include a processor 1701, a transceiver 1702, and a memory 1703.

The processor 1701 includes one or more processing cores, and the processor 1701 executes various functional applications and information processing by running software programs and modules.

The transceiver 1702 may include a receiver and a transmitter. For example, the transceiver 1702 may include a wired communication component, which may include a wired communication chip and a wired interface (such as an optical fiber interface). Optionally, the transceiver 1702 may also include a wireless communication component, which may include a wireless communication chip and a radio frequency antenna.

The memory 1703 may be connected to the processor 1701 and the transceiver 1702.

The memory 1703 may be used to store a computer program executed by the processor, and the processor 1701 is used to execute the computer program to realize the steps executed by the access network device in the wireless communication system in the above method embodiments.

In addition, the memory 1703 may be realized by any type of volatile or non-volatile memory device or a combination thereof, including, but not limited to: a magnetic disk or an optical disk, an electrically erasable programmable read-only memory, an erasable programmable read-only memory, a static random access memory, a read-only memory, a magnetic memory, a flash memory and a programmable read-only memory.

Embodiments of the present disclosure also provide a computer-readable storage medium having stored therein at least one instruction, at least one program, a code set or an instruction set. The at least one instruction, the at least one program, the code set or the instruction set is loaded and executed by a processor to cause a communication device to implement the method for indicating the TCI state as described above.

The present disclosure also provides a computer program product, which includes computer instructions stored in a computer-readable storage medium. The computer instructions are read by a processor of a computer device from the computer-readable storage medium and executed by the processor, so that the computer program product executes the steps executed by the terminal or the access network device in the above methods.

The present disclosure also provides a chip, which is configured to run in a computer device, so that the computer device executes the steps executed by the terminal or the access network device in the above methods.

The present disclosure also provides a computer program, which is executed by a processor of a computer device, and a network device equipped with the computer program implements the steps executed by the terminal or the access network device in the above methods.

It should be understood by those skilled in the art, in one or more of the above examples, the functions described in the embodiments of the present disclosure may be realized by the hardware, software, firmware or any combination thereof. When they are realized by the hardware, these functions may be stored in computer-readable media or transmitted as one or more instructions or codes on computer-readable media. The computer-readable medium includes a computer storage medium and a communication medium, and the communication medium includes any medium facilitating a transmission of a computer program from one place to another. The storage medium may be a usable medium accessible to a general-purpose or special-purpose computer.

Terms used herein in the embodiments of the present disclosure are only for the purpose of describing specific embodiments, but should not be construed to limit the embodiments of the present disclosure. As used in the embodiments of the present disclosure and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in the embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of the embodiments of the present disclosure. As used herein, the terms "if" and "in response to" may be construed to mean "when" or "upon" or "in response to determining" depending on the context.

It should be understood that above embodiments of the present disclosure are just illustrative embodiments, and cannot be construed to limit the present disclosure. Any modification, equivalent replacement, improvement, etc. made within the spirit and principles of the present disclosure shall be included in the scope of protection of the present disclosure.

## Claims

1. A method for indicating a transmission configuration indication (TCI) state, performed by a terminal, and comprising:
receiving first indication information, wherein the first indication information is configured to indicate a first TCI state, the first TCI state comprises N TCI states, and the TCI state comprises a joint TCI state and/or a downlink TCI state, wherein N is an integer greater than 1; and
receiving target indication information, wherein the target indication information is configured to indicate a target TCI state used in a case that a target physical downlink control channel (PDCCH) is received, and the target TCI state is a subset of the first TCI state.

2. The method according to claim 1, wherein receiving the target indication information comprises:
receiving second indication information, wherein the second indication information is configured to indicate a second TCI state used in a case that a first PDCCH is received, and the second TCI state includes M TCI states; or
receiving third indication information, wherein the third indication information is configured to indicate a third TCI state used in a case that a second PDCCH is received, and the third TCI state includes L TCI states; or
receiving second indication information and third indication information,
wherein the M TCI states are a subset of the N TCI states, M is a positive integer not greater than N, the L TCI states are a subset of the N TCI states, and L is a positive integer not greater than N.

3. The method according to claim 2, wherein
a reception of the first PDCCH comprises at least two PDCCH candidates, and search space sets (SS sets) corresponding to the at least two PDCCH candidates have a link relationship; and
each SS set has a corresponding control resource set (CORESET).

4. The method according to claim 3, wherein each SS set or each CORESET is configured with a TCI state, comprising:
each SS set or each CORESET has a corresponding identification information (ID), and the identification information is a control resource set pool index (CORESETPoolIndex) or a CORESET group ID or an SS set group ID or a PDCCH group ID.

5. The method according to claim 1, wherein
the first indication information is carried in a first media access control control element (MAC CE), and the first MAC CE is configured to indicate the N TCI states; or
the first indication information is carried in a second MAC CE and a first downlink control information (DCI), the second MAC CE is configured to indicateindicates N TCI states corresponding to each of at least two code points, and the first DCI is configured to indicateindicates one code point of the at least two code points.

6. The method according to claim 5, wherein
the first indication information comprises identification information corresponding to each TCI state, and the identification information is a CORESETPoolIndex or a CORESET group ID or an SS set group ID or a PDCCH group ID; or
the first indication information comprises the N TCI states, and each TCI state of the N TCI states has a default mapping relationship with identification information.

7. The method according to any one of claims 2 to 4, wherein
the second indication information comprises identification information corresponding to the at least two PDCCH candidates and/or a corresponding relationship between identification information and the M TCI states,
wherein the identification information is a CORESETPoolIndex or a CORESET group ID or an SS set group ID or a PDCCH group ID.

8. The method according to claim 2, wherein
the second indication information is carried in a third MAC CE, and the third MAC CE is the same as or different from a MAC CE where the first indication information is located.

9. The method according to claim 8, wherein
in a case that the third MAC CE is the same as the MAC CE carrying the first indication information, the third MAC CE is configured to indicate the N TCI states, the M TCI states and a corresponding relationship between identification information and the M TCI states,
wherein the identification information is a CORESETPoolIndex or a CORESET group ID or an SS set group ID or a PDCCH group ID.

10. The method according to claim 2, wherein
the second indication information is carried in a second DCI, and the second DCI is the same as or different from a DCI where the first indication information is located.

11. The method according to claim 10, wherein
the first indication information is carried in a DCI in a DCI format of 1_1 or 1_2 without a downlink assignment, and the second DCI is the DCI in the DCI format of 1_1 or 1_2 without the downlink assignment; or
the first indication information is carried in a DCI in a DCI format of 1_1 or 1_2 with a downlink assignment, and the second DCI is a DCI in the DCI format of 1_1 or 1_2 without the downlink assignment; or
the first indication information is carried in a DCI in a DCI format of 1_1 or 1_2 without a downlink assignment, and the second DCI is a DCI in the DCI format of 1_1 or 1_2 with the downlink assignment; or
the first indication information is carried in a DCI in a DCI format of 1_1 or 1_2 with a downlink assignment, and the second DCI is the DCI in the DCI format of 1_1 or 1_2 with the downlink assignment; or
the first indication information is carried in a DCI in a DCI format of 1_1 or 1_2 with or without a downlink assignment, and the second DCI is a DCI in a DCI format other than 1_1 and 1_2.

12. The method according to claim 11, wherein a field used by the second indication information in the DCI in the DCI format of 1_1 or 1_2 without the downlink assignment comprises at least one of:
a frequency domain resource assignment;
a time domain resource assignment;
a virtual resource block to physical resource block mapping;
a physical resource block binding size indicator;
a rate matching indicator;
a non-zero power channel state information reference signal (CSI-RS) triggering;
a hybrid automatic repeat request (HARQ) process number;
a downlink assignment index;
a transmit power control command for a scheduled physical uplink control channel (PUCCH);
a second transmit power control command for a scheduled PUCCH;
a PUCCH resource indicator;
a timing indicator form a physical downlink shared channel (PDSCH) to a HARQ feedback;
a one-shot hybrid automatic repeat request acknowledgement (HARQ-ACK) request;
an enhanced type 3 codebook indicator;
a PDSCH group index;
a new feedback indicator;
a number of requested PDSCH groups;
a HARQ-ACK retransmission indicator;
an antenna port;
a sounding reference signal (SRS) request;
a SRS offset indicator;
code block group (CGB) transmission information;
CBG flushing out information;
a demodulation reference signal (DMRS) sequence initialization;
a priority indicator;
a channel access-cyclic prefix (CP);
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a second TCI state indication field.

13. The method according to claim 11, wherein a field used by the second indication information in the DCI in the DCI format of 1_1 or 1_2 with the downlink assignment comprises at least one of:
a frequency domain resource assignment;
a time domain resource assignment;
a virtual resource block to physical resource block mapping;
a physical resource block binding size indicator;
a rate matching indicator;
a non-zero power CSI-RS triggering;
a HARQ process number;
a downlink assignment index;
a transmit power control command for a scheduled PUCCH;
a second transmit power control command for a scheduled PUCCH;
a PUCCH resource indicator;
a timing indicator from a PDSCH to a HARQ feedback;
a one-shot HARQ-ACK request;
an enhanced type 3 codebook indicator;
a PDSCH group index;
a new feedback indicator;
a number of requested PDSCH groups;
a HARQ-ACK retransmission indicator;
an antenna port;
a sounding reference signal (SRS) request;
a SRS offset indicator;
CGB transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a second TCI state indication field.

14. The method according to claim 11, wherein
in a case that the second DCI is the DCI in the DCI format other than 1_1 and 1_2, an SS set type associated with the second DCI is a user equipment specific SS set or a common SS set.

15. The method according to claim 2, wherein
a reception of the second PDCCH comprises one PDCCH candidate, and an SS set or a CORESET corresponding to the PDCCH candidate is configured with at least one TCI state.

16. The method according to claim 15, wherein
the reception of the second PDCCH is configured as a transmission scheme based on a single-frequency network (SFN), and the number of the at least one TCI state is greater than or equal to 1.

17. The method according to claim 16, wherein the transmission scheme based the SFN comprises:
SFN scheme A; or
SFN scheme B.

18. The method according to claim 2, wherein
the third indication information is carried in a fourth MAC CE, and the fourth MAC CE is the same as or different from a MAC CE where the first indication information is located.

19. The method according to claim 2, wherein
the third indication information is carried in a third DCI, and the third DCI is the same as or different from the first DCI.

20. The method according to claim 19, wherein
the first indication information is carried in a DCI in a DCI format of 1_1 or 1_2 without a downlink assignment, and the third DCI is the DCI in the DCI format of 1_1 or 1_2 without the downlink assignment; or
the first indication information is carried in a DCI in a DCI format of 1_1 or 1_2 with a downlink assignment, and the third DCI is a DCI in the DCI format of 1_1 or 1_2 without the downlink assignment; or
the first indication information is carried in a DCI in a DCI format of 1_1 or 1_2 without a downlink assignment, and the third DCI is a DCI in the DCI format of 1_1 or 1_2 with the downlink assignment; or
the first indication information is carried in a DCI in a DCI format of 1_1 or 1_2 with a downlink assignment, and the third DCI is the DCI in the DCI format of 1_1 or 1_2 with the downlink assignment; or
the first indication information is carried in a DCI in a DCI format of 1_1 or 1_2 with or without a downlink assignment, and the third DCI is a DCI in a DCI format other than 1_1 and 1_2.

21. The method according to claim 20, wherein a field used by the third indication information in the DCI in the DCI format of 1_1 or 1_2 without the downlink assignment comprises at least one of:
a frequency domain resource assignment;
a time domain resource assignment;
a virtual resource block to physical resource block mapping;
a physical resource block binding size indicator;
a rate matching indicator;
a non-zero power CSI-RS triggering;
a HARQ process number;
a downlink assignment index;
a transmit power control command for a scheduled PUCCH;
a second transmit power control command for a scheduled PUCCH;
a PUCCH resource indicator;
a timing indicator from a PDSCH to a HARQ feedback;
a one-shot HARQ-ACK request;
an enhanced type 3 codebook indicator;
a PDSCH group index;
a new feedback indicator;
a number of requested PDSCH groups;
a HARQ-ACK retransmission indicator;
an antenna port;
a sounding reference signal (SRS) request;
a SRS offset indicator;
CGB transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a third TCI state indication field.

22. The method according to claim 20, wherein a field used by the third indication information in the DCI in the DCI format of 1_1 or 1_2 with the downlink assignment comprises at least one of:
a frequency domain resource assignment;
a time domain resource assignment;
a virtual resource block to physical resource block mapping;
a physical resource block binding size indicator;
a rate matching indicator;
a non-zero power CSI-RS triggering;
a HARQ process number;
a downlink assignment index;
a transmit power control command for a scheduled PUCCH;
a second transmit power control command for a scheduled PUCCH;
a PUCCH resource indicator;
a timing indicator from a PDSCH to a HARQ feedback;
a one-shot HARQ-ACK request;
an enhanced type 3 codebook indicator;
a PDSCH group index;
a new feedback indicator;
a number of requested PDSCH groups;
a HARQ-ACK retransmission indicator;
an antenna port;
a sounding reference signal (SRS) request;
a SRS offset indicator;
CGB transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a third TCI state indication field.

23. The method according to claim 20, wherein
in a case that the third DCI is the DCI in the DCI format other than 1_1 and 1_2, an SS set type associated with the third DCI is a user equipment specific SS set or a common SS set.

24. The method according to claim 2, wherein
a MAC CE where the second indication information is located and a MAC CE where the third indication information is located are the same or different; or
a DCI where the second indication information is located and a DCI where the third indication information is located are the same or different.

25. The method according to claim 24, wherein
in a case that the MAC CE where the second indication information is located and the MAC CE where the third indication information is located are the same, the MAC CE is configured to indicate the M TCI states or the L TCI states corresponding to each of different CORESETs or SS sets.

26. The method according to claim 25, wherein
in a case that the DCI where the second indication information is located and the DCI where the third indication information is located are the same, the DCI is configured to indicate the M TCI states or the L TCI states corresponding to each of different CORESETs or SS sets.

27. The method according to any one of claims 1 to 26, further comprising:
a MAC CE or a DCI where the target indication information is located being further configured to indicate a fourth TCI state of at least one channel, and the at least one channel comprising at least one of:
a physical uplink control channel (PUCCH);
a physical uplink shared channel (PUSCH); and
a physical downlink shared channel (PDSCH).

28. The method according to claim 27, wherein
in a case that the at least one channel comprises the PDSCH, the fourth TCI state is a subset of the first TCI state; or
in a case that the at least one channel comprises the PUCCH or the PUSCH, the first TCI state comprises N joint TCI states and/or uplink TCI states, and the fourth TCI state is a subset of the N joint TCI states and/or uplink TCI states.

29. The method according to any one of claims 1 to 28, wherein
the target indication information comprises at least one bandwidth part identity (BWP ID) and/or at least one component carrier identity (CC ID).

30. The method according to claim 29, wherein
in a case that the CC ID is a CC ID in a CC list, the target TCI state is applicable to all BWPs on all CCs in the CC list.

31. The method according to any one of claims 1 to 28, wherein
at least one BWP ID and/or at least one CC ID corresponding to the target TCI state indicated by the target indication information are the same as a BWP ID and/or a CC ID corresponding to the N TCI states indicated by the first indication information.

32. A method for indicating a transmission configuration indication (TCI) state, performed by an access network device, and comprising:
sending first indication information, wherein the first indication information is configured to indicate a first TCI state, and the first TCI state comprises N TCI states, and the TCI state comprises a joint TCI state and/or a downlink TCI state, wherein N is an integer greater than 1; and
sending target indication information, wherein the target indication information is configured to indicate a target TCI state used in a case that a target physical downlink control channel (PDCCH) is received, and the target TCI state is a subset of the first TCI state.

33. The method according to claim 32, wherein sending the target indication information comprises:
sending second indication information, wherein the second indication information is configured to indicate a second TCI state used in a case that a first PDCCH is received, and the second TCI state comprises M TCI states; or
sending third indication information, wherein the third indication information is configured to indicate a third TCI state used in a case that a second PDCCH is received, and the third TCI state comprises L TCI states; or
sending second indication information and third indication information,
wherein the M TCI states are a subset of the N TCI states, M is a positive integer not greater than N, the L TCI states are a subset of the N TCI states, and L is a positive integer not greater than N.

34. The method according to claim 33, wherein
a reception of the first PDCCH comprises at least two PDCCH candidates, and search space sets (SS sets) corresponding to the at least two PDCCH candidates have a link relationship; and
each SS set has a corresponding control resource set (CORESET).

35. The method according to claim 34, wherein each SS set or each CORESET is configured with a TCI state, comprising:
each SS set or each CORESET has a corresponding identification information (ID), and the identification information is a control resource set pool index (CORESETPoolIndex) or a CORESET group ID or an SS set group ID or a PDCCH group ID.

36. The method according to claim 32, wherein
the first indication information is carried in a first media access control control element (MAC CE), and the first MAC CE is configured to indicate the N TCI states; or
the first indication information is carried in a second MAC CE and a first downlink control information (DCI), the second MAC CE is configured to indicate N TCI states corresponding to each of at least two code points, and the first DCI is configured to indicate one code point of the at least two code points.

37. The method according to claim 36, wherein
the first indication information comprises identification information corresponding to each TCI state, and the identification information is a CORESETPoolIndex or a CORESET group ID or an SS set group ID or a PDCCH group ID; or
the first indication information comprises the N TCI states, and each TCI state of the N TCI states has a default mapping relationship with identification information.

38. The method according to any one of claims 33 to 35, wherein
the second indication information comprises identification information corresponding to the at least two PDCCH candidates and/or a corresponding relationship between identification information and the M TCI states,
wherein the identification information is a CORESETPoolIndex or a CORESET group ID or an SS set group ID or a PDCCH group ID.

39. The method according to claim 33, wherein
the second indication information is carried in a third MAC CE, and the third MAC CE is the same as or different from a MAC CE where the first indication information is located.

40. The method according to claim 39, wherein
in a case that the third MAC CE is the same as the MAC CE carrying the first indication information, the third MAC CE is configured to indicate the N TCI states, the M TCI states and a corresponding relationship between identification information and the M TCI states,
wherein the identification information is a CORESETPoolIndex or a CORESET group ID or an SS set group ID or a PDCCH group ID.

41. The method according to claim 33, wherein
the second indication information is carried in a second DCI, and the second DCI is the same as or different from a DCI where the first indication information is located.

42. The method according to claim 41, wherein
the first indication information is carried in a DCI in a DCI format of 1_1 or 1_2 without a downlink assignment, and the second DCI is the DCI in the DCI format of 1_1 or 1_2 without the downlink assignment; or
the first indication information is carried in a DCI in a DCI format of 1_1 or 1_2 with a downlink assignment, and the second DCI is a DCI in the DCI format of 1_1 or 1_2 without the downlink assignment; or
the first indication information is carried in a DCI in a DCI format of 1_1 or 1_2 without a downlink assignment, and the second DCI is a DCI in the DCI format of 1_1 or 1_2 with the downlink assignment; or
the first indication information is carried in a DCI in a DCI format of 1_1 or 1_2 with a downlink assignment, and the second DCI is the DCI in the DCI format of 1_1 or 1_2 with the downlink assignment; or
the first indication information is carried in a DCI in a DCI format of 1_1 or 1_2 with or without a downlink assignment, and the second DCI is a DCI in a DCI format other than 1_1 and 1_2.

43. The method according to claim 42, wherein a field used by the second indication information in the DCI in the DCI format of 1_1 or 1_2 without the downlink assignment comprises at least one of:
a frequency domain resource assignment;
a time domain resource assignment;
a virtual resource block to physical resource block mapping;
a physical resource block binding size indicator;
a rate matching indicator;
a non-zero power channel state information reference signal (CSI-RS) triggering;
a hybrid automatic repeat request (HARQ) process number;
a downlink assignment index;
a transmit power control command for a scheduled physical uplink control channel (PUCCH);
a second transmit power control command for a scheduled PUCCH;
a PUCCH resource indicator;
a timing indicator form a physical downlink shared channel (PDSCH) to a HARQ feedback;
a one-shot hybrid automatic repeat request acknowledgement (HARQ-ACK) request;
an enhanced type 3 codebook indicator;
a PDSCH group index;
a new feedback indicator;
a number of requested PDSCH groups;
a HARQ-ACK retransmission indicator;
an antenna port;
a sounding reference signal (SRS) request;
a SRS offset indicator;
code block group (CGB) transmission information;
CBG flushing out information;
a demodulation reference signal (DMRS) sequence initialization;
a priority indicator;
a channel access-cyclic prefix (CP);
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a second TCI state indication field.

44. The method according to claim 42, wherein a field used by the second indication information in the DCI in the DCI format of 1_1 or 1_2 with the downlink assignment comprises at least one of:
a frequency domain resource assignment;
a time domain resource assignment;
a virtual resource block to physical resource block mapping;
a physical resource block binding size indicator;
a rate matching indicator;
a non-zero power CSI-RS triggering;
a HARQ process number;
a downlink assignment index;
a transmit power control command for a scheduled PUCCH;
a second transmit power control command for a scheduled PUCCH;
a PUCCH resource indicator;
a timing indicator from a PDSCH to a HARQ feedback;
a one-shot HARQ-ACK request;
an enhanced type 3 codebook indicator;
a PDSCH group index;
a new feedback indicator;
a number of requested PDSCH groups;
a HARQ-ACK retransmission indicator;
an antenna port;
a sounding reference signal (SRS) request;
a SRS offset indicator;
CGB transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a second TCI state indication field.

45. The method according to claim 42, wherein
in a case that the second DCI is the DCI in the DCI format other than 1_1 and 1_2, an SS set type associated with the second DCI is a user equipment specific SS set or a common SS set.

46. The method according to claim 33, wherein
a reception of the second PDCCH comprises one PDCCH candidate, and an SS set or a CORESET corresponding to the PDCCH candidate is configured with at least one TCI state.

47. The method according to claim 46, wherein
the reception of the second PDCCH is configured as a transmission scheme based on a single-frequency network (SFN), and the number of the at least one TCI state is greater than or equal to 1.

48. The method according to claim 47, wherein the transmission scheme based the SFN comprises:
SFN scheme A; or
SFN scheme B.

49. The method according to claim 33, wherein
the third indication information is carried in a fourth MAC CE, and the fourth MAC CE is the same as or different from a MAC CE where the first indication information is located.

50. The method according to claim 33, wherein
the third indication information is carried in a third DCI, and the third DCI is the same as or different from the first DCI.

51. The method according to claim 50, wherein
the first indication information is carried in a DCI in a DCI format of 1_1 or 1_2 without a downlink assignment, and the third DCI is the DCI in the DCI format of 1_1 or 1_2 without the downlink assignment; or
the first indication information is carried in a DCI in a DCI format of 1_1 or 1_2 with a downlink assignment, and the third DCI is a DCI in the DCI format of 1_1 or 1_2 without the downlink assignment; or
the first indication information is carried in a DCI in a DCI format of 1_1 or 1_2 without a downlink assignment, and the third DCI is a DCI in the DCI format of 1_1 or 1_2 with the downlink assignment; or
the first indication information is carried in a DCI in a DCI format of 1_1 or 1_2 with a downlink assignment, and the third DCI is the DCI in the DCI format of 1_1 or 1_2 with the downlink assignment; or
the first indication information is carried in a DCI in a DCI format of 1_1 or 1_2 with or without a downlink assignment, and the third DCI is a DCI in a DCI format other than 1_1 and 1_2.

52. The method according to claim 51, wherein a field used by the third indication information in the DCI in the DCI format of 1_1 or 1_2 without the downlink assignment comprises at least one of:
a frequency domain resource assignment;
a time domain resource assignment;
a virtual resource block to physical resource block mapping;
a physical resource block binding size indicator;
a rate matching indicator;
a non-zero power CSI-RS triggering;
a HARQ process number;
a downlink assignment index;
a transmit power control command for a scheduled PUCCH;
a second transmit power control command for a scheduled PUCCH;
a PUCCH resource indicator;
a timing indicator from a PDSCH to a HARQ feedback;
a one-shot HARQ-ACK request;
an enhanced type 3 codebook indicator;
a PDSCH group index;
a new feedback indicator;
a number of requested PDSCH groups;
a HARQ-ACK retransmission indicator;
an antenna port;
a sounding reference signal (SRS) request;
a SRS offset indicator;
CGB transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a third TCI state indication field.

53. The method according to claim 51, wherein a field used by the third indication information in the DCI in the DCI format of 1_1 or 1_2 with the downlink assignment comprises at least one of:
a frequency domain resource assignment;
a time domain resource assignment;
a virtual resource block to physical resource block mapping;
a physical resource block binding size indicator;
a rate matching indicator;
a non-zero power CSI-RS triggering;
a HARQ process number;
a downlink assignment index;
a transmit power control command for a scheduled PUCCH;
a second transmit power control command for a scheduled PUCCH;
a PUCCH resource indicator;
a timing indicator from a PDSCH to a HARQ feedback;
a one-shot HARQ-ACK request;
an enhanced type 3 codebook indicator;
a PDSCH group index;
a new feedback indicator;
a number of requested PDSCH groups;
a HARQ-ACK retransmission indicator;
an antenna port;
a sounding reference signal (SRS) request;
a SRS offset indicator;
CGB transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a third TCI state indication field.

54. The method according to claim 51, wherein
in a case that the third DCI is the DCI in the DCI format other than 1_1 and 1_2, an SS set type associated with the third DCI is a user equipment specific SS set or a common SS set.

55. The method according to claim 33, wherein
a MAC CE where the second indication information is located and a MAC CE where the third indication information is located are the same or different; or
a DCI where the second indication information is located and a DCI where the third indication information is located are the same or different.

56. The method according to claim 55, wherein
in a case that the MAC CE where the second indication information is located and the MAC CE where the third indication information is located are the same, the MAC CE is configured to indicate the M TCI states or the L TCI states corresponding to each of different CORESETs or SS sets.

57. The method according to claim 56, wherein
in a case that a DCI where the second indication information is located and a DCI where the third indication information is located are the same, the DCI is configured to indicate the M TCI states or the L TCI states corresponding to each of different CORESETs or SS sets.

58. The method according to any one of claims 32 to 57, further comprising:
a MAC CE or a DCI where the target indication information is located being further configured to indicate a fourth TCI state of at least one channel, and the at least one channel comprising at least one of:
a physical uplink control channel (PUCCH);
a physical uplink shared channel (PUSCH); and
a physical downlink shared channel (PDSCH).

59. The method according to claim 58, wherein
in case that the at least one channel comprises the PDSCH, the fourth TCI state is a subset of the first TCI state; or
in a case that the at least one channel comprises the PUCCH or the PUSCH, the first TCI state comprises N joint TCI states and/or uplink TCI states, and the fourth TCI state is a subset of the N joint TCI states and/or uplink TCI states.

60. The method according to any one of claims 32 to 59, wherein
the target indication information comprises at least one bandwidth part identity (BWP ID) and/or at least one component carrier identity (CC ID).

61. The method according to claim 60, wherein
in a case that the CC ID is a CC ID in a CC list, the target TCI state is applicable to all BWPs on all CCs in the CC list.

62. The method according to any one of claims 32 to 59, wherein
at least one BWP ID and/or at least one CC ID corresponding to the target TCI state indicated by the target indication information are the same as a BWP ID and/or a CC ID corresponding to the N TCI states indicated by the first indication information.

63. An apparatus for indicating a transmission configuration indication (TCI) state, comprising:
a first receiving module configured to receive first indication information, wherein the first indication information is configured to indicate a first TCI state, the first TCI state comprises N TCI states, and the TCI state comprises a joint TCI state and/or a downlink TCI state, wherein N is an integer greater than 1; and
a target receiving module configured to receive target indication information, wherein the target indication information is configured to indicate a target TCI state used in a case that a target physical downlink control channel (PDCCH) is received, and the target TCI state is a subset of the first TCI state.

64. An apparatus for indicating a transmission configuration indication (TCI) state, comprising:
a first sending module configured to send first indication information, wherein the first indication information is configured to indicate a first TCI state, the first TCI state comprises N TCI states, and the TCI states include a joint TCI state and/or a downlink TCI state, wherein N is an integer greater than 1; and
a target sending module configured to send target indication information, wherein the target indication information is configured to indicate a target TCI state used in a case that a target physical downlink control channel (PDCCH) is received, and the target TCI state is a subset of the first TCI state.

65. A terminal, comprising:
a processor; and
a transceiver connected with the processor,
wherein the processor is configured to load and execute executable instructions to realize a method for indicating a TCI state according to any one of claims 1 to 31.

66. An access network device, comprising:
a processor; and
a transceiver connected with the processor,
wherein the processor is configured to load and execute executable instructions to realize a method for indicating a TCI state according to any one of claims 32 to 62.

67. A computer-readable storage medium, storing at least one instruction, at least one program, a code set or an instruction set therein, wherein the at least one instruction, the at least one program, the code set or the instruction set is loaded and executed by a processor to realize a method for indicating a TCI state according to any one of claims 1 to 31, or to realize a method for indicating a TCI state according to any one of claims 32 to 62.
